# EUROPEAN PATENT SPECIFICATION

(11) **EP 4 652 217 B1**
(45) Date of publication and mention of the grant of the patent: **19.08.2026**
(21) Application number: 23836455.8
(22) Date of filing: 19.12.2023
(51) Int. Cl.: C08G 77/12, C08G 77/20, C08L 83/04

(54) **THERMALLY CONDUCTIVE SILICONE COMPOSITION AND METHOD FOR PRODUCING SAME**
WÄRMELEITFÄHIGE SILIKONZUSAMMENSETZUNG UND HERSTELLUNGSVERFAHREN DAFÜR
COMPOSITION DE SILICONE THERMOCONDUCTRICE ET SON PROCÉDÉ DE PRODUCTION

(30) Priority: 17.01.2023 JP 2023005041
(43) Date of publication of application: 26.11.2025
(73) Proprietor: Wacker Chemie AG, 81671 München (DE)
(72) Inventor: TAKAHASHI, Akihiro, Chikusei-shi, Ibaraki 300--4522 (JP); YAMADA, Shunsuke, Chikusei-shi, Ibaraki 300--4522 (JP)
(74) Representative: Mieskes, Klaus Theoderich
(86) International application number: PCT/EP2023/086759
(87) International publication number: WO 2024/153428

(56) References cited:
- EP-A1- 3 360 928
- EP-A1- 4 083 127
- WO-A1-2021/184149
- US-A1- 2021 317 313

## Description

### Technical Field

The present invention relates to a thermally conductive silicone composition including a thermally conductive filler and a predetermined hydrogenated cyclic siloxane, a method for producing the composition, and a method for producing a cured product using the composition.

### Background Art

A silicone thermally conductive member, such as a gap filler, functions as a thermally conductive material that fills a gap between a heat generating body and a heat dissipating body. Such a member serves to transfer heat from the heat generating body such as an electric vehicle battery or an electronic device semiconductor to a heat dissipating member such as a heat sink.

In order to transfer the heat from the heat generating body to the heat dissipating body, such a gap filler needs to be always in contact with both bodies at the respective interfaces. When used as a heat dissipating body for a battery, a gap filler in an uncured state is usually applied to the surface of either a cooling body or a heat generating body such as a battery cell or battery pack, and then compressed between the two bodies. The gap filler thus fills a gap between both bodies and then undergoes curing and is adhering to both bodies with a secure contact interface, thereby functioning to transfer heat.

Conventionally, such a gap filler has been used in heat dissipation for a battery that may generate heat within a temperature increase of about 50°C. However, in recent years, the gap filler has also been used in heat dissipation for an in-vehicle electrical module that reaches high temperatures of, for example, 180°C or higher, a component of an electric control unit (ECU) such as an inverter, or a similar component.

In such a case, higher heat generation due to a higher current is assumed, and thus more efficient countermeasures for dissipating the generated heat are required. That is, heat dissipation performance higher (e.g., 5 W/m·K or more) than that of common heat dissipating materials for batteries is required. Furthermore, it is necessary to reliably maintain the thermal conductivity at high temperatures, and it is also desirable that any changes in temperature-dependent physical properties be small and that adhesion of the gap filler at the interface to a heat generating body and to a heat dissipating body such as a heat sink be sufficiently high.

Several silicone products have been developed that exhibit excellent properties even at high temperatures.

For example, PTL 1 discloses a thermally conductive silicone adhesive composition that provides a cured product with good adhesion and little change in hardness after aging at 150°C. The composition can be obtained by blending, into the composition, a hydrogenated cyclic siloxane including an oxygen-containing functional group such as an epoxy group. However, no description is given on the adhesion after aging, and further improvement in the thermal conductivity is required.

PTL 2 discloses a thermally conductive silicone heat dissipating material with improved heat resistance. The thermally conductive silicone heat dissipating material is obtained by surface-treating a thermally conductive inorganic filler having a large specific surface area and a small average particle size with a silane coupling agent having a small molecular weight. It is described that the heat dissipating material has an Asker C hardness of minus 15 to 0, relative to the initial hardness, after aging at 220°C for 100 hours in the air and an Asker C hardness of minus 20 to plus 20, relative to the initial hardness, after continuous aging at 220°C for 500 hours in the air. However, there is no description on adhesion, and further improvement in the thermal conductivity is required. PTL3 describes a thermal conductive silicone composition comprising an organopolysiloxane comprising at least two alkenyl groups per molecule, an organopolysiloxane comprising at least three SiH groups per molecule, an organopolysiloxane comprising at least two SiH groups per molecule, aluminium hydroxyde powder having an average particle size of 5-50 microns as thermal conductive filler and a hydrosilylation catalyst.

PTL4 describes a silicone resin composition comprising an organopolysiloxane comprising at least two alkenyl groups per molecule, a branched organopolysiloxane comprising alkenyl groups, an organopolysiloxane comprising at least two SiH groups per molecule, a hydrosilylation catalyst and an organopolysiloxane comprising an Si-O-Ce bond and an Si-O-Ti bond. The SiH-containing organopolysiloxane may have a linear or cyclic structure and with a number of silicone atoms per molecule preferably between 4 to 50.

PTL5 describes a curable silicone composition comprising an organopolysiloxane comprising at least two alkenyl groups per molecule, an organopolysiloxane comprising at least two SiH groups per molecule, a hydrosilylation catalyst, a condensation reaction catalyst and a curing inhibitor. The composition may further comprise a filler such as a thermally or electrically conductive filler in an amount of 0.1-200 wt.% relative to the total weight of the silicone composition. The SiH-containing polysiloxane may have a cyclic structure such as D3H , D4H or D5H.

Finally, PTL6 describes a thermally conductive silicone composition comprising a thermally conductive filler, an organopolysiloxane comprising a curable functional group such as an acrylate group, a linear siloxane compound comprising an alkoxysilyl group, a SiH-containing polysiloxane compound and a hydrosilylation catalyst. The SiH-containing polysiloxane may have a cyclic or linear structure with a polymerisation degree of 15-70.

### Citation List

### Patent Literature

PTL 1: Japanese Patent Application Laid-Open No. 2021-113289
PTL 2: Japanese Patent No. 6988023 (corresponding to WO2022/049902) PTL3:WO 2021/184149
PTL4: European Patent No.3360928
PTL5: European Patent No.4083127
PTL6: United States Patent No.2021/317313

### Summary Of Invention

### Technical Problem

In order to achieve high heat dissipation, it is necessary to highly pack the thermally conductive filler. As a result, the proportional content of an alkenyl group-containing organopolysiloxane and a hydrosilyl group-containing organopolysiloxane, which are the polymer components, becomes low.

Thus, the initial cross-linking density by the hydrosilylation reaction tends to decrease. As a result, the hardness of the composition at the initial stage of the reaction is low, but the hardness rises rapidly during exposure to high temperatures. As a result, voids occur between the composition and the substrate. The occurrence of voids reduces the adhesion to the substrate, causing a problem in that the heat dissipation properties are impaired.

In particular, in power control units of recent hybrid vehicles, electric vehicles, fuel cell vehicles, and the like, reactors and similar components are used and reach high temperatures during use. The above-mentioned problems become more pronounced when the heat dissipating material is used in such components.

Furthermore, increasing the blending amount of the hydrosilyl group-containing siloxane, in order to improve the cross-linking density relatively, increases the blending amount of the polymers. The blending amount of the thermally conductive filler thus decreases. As a result, a problem may occur where thermal conductivity is insufficient.

When siloxanes with a high hydrosilyl group content per unit weight are used, some of the hydrosilyl group-containing siloxanes have a higher curing rate, leading to a shorter pot life (workable time). Thus, the time that elapses from the application to the compression of the thermally conductive silicone composition must be reduced, and in order to do so, it is necessary to perform the application work in a short period of time, causing a problem of deterioration of workability.

Under such circumstances, there is a demand for the development of a thermally conductive silicone composition that exhibits high heat dissipation performance, undergoes little change in physical properties even after exposure to a high temperature of 190°C, and is balanced in terms of being excellent in both adhesion and workability.

An object of the present invention is to provide a thermally conductive silicone composition that produces a cured product with the following characteristics. The cured product exhibits high heat dissipation performance (e.g., 5.0 W/m·K or more), does not produce voids because little change occurs in the physical properties (e.g., adhesion and hardness) when exposed to high temperatures, and has excellent workability.

### Solution To Problem

The present inventors have found that the problems of the present invention can be solved by blending, in a silicone composition including an organopolysiloxane, a thermally conductive filler and a hydrogenated cyclic siloxane having only repeating units of -SiRHO- and having a polymerization degree of 4 or more and 8 or less, thereby completing the present invention.

When the above-mentioned hydrogenated cyclic siloxane is blended in the thermally conductive silicone composition, the cross-linking density can be enhanced even with a small blending amount, making it possible to obtain a composition having a curing rate that is not too slow at normal temperature (e.g., 10°C or higher and 30°C or lower). Thus, the composition has characteristics in that a cross-linking reaction (also referred to as curing reaction) is completed within a predetermined time after the curing reaction is started, and even when exposed to high temperatures after the reaction, the cured product has little change in hardness, and voids are unlikely to occur after high temperature exposure.

Since the above-mentioned effects can be obtained by a small blending amount of the hydrogenated cyclic siloxane, a relatively large amount of the thermally conductive filler can be blended to obtain the cured product with high thermal conductivity.

Furthermore, a sufficient pot life (workable time), in other words the amount of time before the completion of the cross-linking reaction, can be secured for applying the composition as a gap filler to a substrate such as a reactor or a heat sink. Thus, the composition has good workability.

The thermally conductive silicone composition according to the present invention is a thermally conductive silicone composition including:
a component (A) that is an alkenyl group-containing organopolysiloxane;
a component (B) that is a linear organopolysiloxane having two or more hydrosilyl groups within one molecule;
a component (C) that is a hydrogenated cyclic siloxane represented by the following general formula (1) 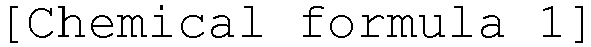 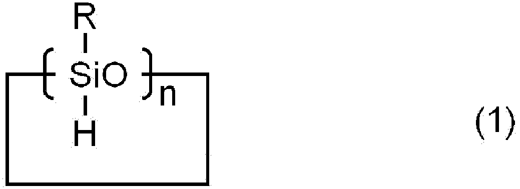 (in the formula, n is an integer of 4 or more and 8 or less, and R is a monovalent hydrocarbon group having 1 to 6 carbon atoms) ;
a component (D) that is an addition reaction catalyst; and
a component (E) that is a thermally conductive filler. In the thermally conductive silicone composition, relative to 100 parts by mass of a total amount of the component (A) and the component (B),
the content of the component (C) is 0.5 parts by mass or more and 1.8 parts by mass or less; and
the content of the component (E) is 500 parts by mass or more and 3,000 parts by mass or less.

The thermally conductive silicone composition (hereinafter, which may also be simply referred to as composition) of the present invention may preferably be a composition for forming a cured product used as a thermally conductive member that is to be disposed on the surface of a substrate such as a heat generating body or a heat dissipating body, in particular, on a reactor surface, a battery cell surface, or a battery pack surface. Examples of the form of the thermally conductive member include a gap filler.

The thermally conductive silicone composition according to one aspect of the present invention described above is characterized in that the composition contains the above-mentioned component (C).

In the thermally conductive silicone composition, the component (A) (the alkenyl group-containing organopolysiloxane), the component (B) (the linear organopolysiloxane having two or more hydrosilyl groups within one molecule), and the component (C) (the hydrogenated cyclic siloxane represented by the above-mentioned general formula (1)) are cured by a cross-linking reaction in the presence of the component (D) (the addition reaction catalyst). Herein, the thermally conductive silicone composition contains not only the component (B) but also the component (C) as the hydrosilyl group-containing siloxane within the above-mentioned blending amount range. Thus, this composition makes it possible to enhance the cross-linking density of the cured product obtained by curing the composition, and at the same time, increase the curing rate to be within a range in which a sufficient pot life can be secured. Thus, the composition has characteristics in which the cured product has little change in the hardness even after being exposed to high temperatures (e.g., about 190°C), and voids are unlikely to occur between the substrate and the cured product, allowing the cured product to maintain good thermal conductivity.

Furthermore, the component (C) can sufficiently enhance the cross-linking density even in a relatively small amount. Thus, the relative blending amount of the thermally conductive filler as the component (E) does not need to be reduced, making it possible to obtain a cured product having good thermal conductivity.

In addition, the component (C) has a large content of -SiH group per unit weight, making it possible to obtain good adhesion of the cured product to a substrate even with the component (C) in a small blending amount.

### Advantageous Effects of Invention

As described above, the thermally conductive silicone composition according to the present invention can secure a sufficient pot life. The cured product of the thermally conductive silicone composition shows little change in the hardness after high temperature exposure, and voids are unlikely to occur between the substrate and the cured product, allowing the cured product to exhibit good thermal conductivity. As such, it is possible to obtain the cured product that maintains high thermal conductivity even after high temperature exposure. Such a cured product is particularly suitable as a gap filler applied to a gap between, for example, a battery, a reactor, or the like mounted on a vehicle body, and a heat dissipating body.

### Description of Embodiments

Hereinafter, a thermally conductive silicone composition, a method for producing the composition, and a method for producing a cured product using the composition according to the present invention will be described in detail.

The thermally conductive silicone composition according to the present invention is a thermally conductive silicone composition including:
a component (A) that is an alkenyl group-containing organopolysiloxane;
a component (B) that is a linear organopolysiloxane having two or more hydrosilyl groups within one molecule;
a component (C) that is a hydrogenated cyclic siloxane represented by the following general formula (1) 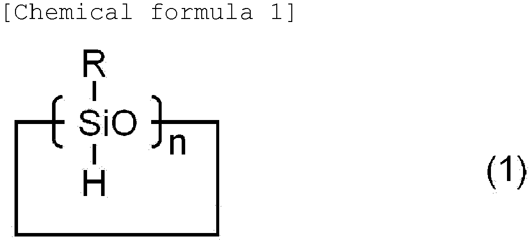 (in the formula, n is an integer of 4 or more and 8 or less, and R is a monovalent hydrocarbon group having 1 to 6 carbon atoms) ;
a component (D) that is an addition reaction catalyst; and
a component (E) that is a thermally conductive filler. In the thermally conductive silicone composition, relative to 100 parts by mass of a total amount of the component (A) and the component (B),
the content of the component (C) is 0.5 parts by mass or more and 1.8 parts by mass or less; and
the content of the component (E) is 500 parts by mass or more and 3,000 parts by mass or less.

The thermally conductive silicone composition of the present invention is preferably a composition for forming a cured product that serves as a thermally conductive member. Examples of the form of the thermally conductive member include a gap filler applied to a heat generating body such as a car battery or reactor, a film covering a heat generating body, and a case for packing a heat generating body.

The thermally conductive silicone composition of the present invention in a liquid state before curing is applied to a substrate, and the composition is then cured to provide a cured product serving as a thermally conductive member.

### Component (A):

The component (A), which is the main component of the composition, is an organopolysiloxane having an alkenyl group bonded to a silicon atom.

The viscosity and the degree of polymerization of the component (A) are not particularly limited, and can be selected according to the required mixing viscosity of the composition and the like, and the viscosity at 25°C may be, for example, 10 mPa·s or more and 10,000 mPa·s or less.

As the organopolysiloxane, one type thereof may be used alone, or two or more types thereof may be used in combination as appropriate. The organopolysiloxane is the main component of the composition and has, on average, at least two alkenyl groups bonded to silicon atoms within one molecule, preferably 2 to 50 alkenyl groups, and more preferably 2 to 20 alkenyl groups.

The molecular structure of the component (A) is not specifically limited, and may be, for example, a linear structure, a partially branched linear structure, a branched chain structure, a cyclic structure, or a branched cyclic structure. Among these, the component (A) is preferably a substantially linear organopolysiloxane. Specifically, the component (A) can be a linear diorganopolysiloxane in which the molecular chain is mainly composed of a diorganosiloxane repeat unit and of which both terminals of the molecular chain are blocked with a triorganosiloxy group. Some or all of the molecular chain terminals, or some of the side chains, may be a silanol group.

The position of the alkenyl group bonded to the silicon atom in the component (A) is not particularly limited, and the component (A) may be an organopolysiloxane having an alkenyl group bonded to a silicon atom at both molecular chain terminals.

The organopolysiloxane having one alkenyl group at each terminal of the molecular chain has an advantage in that the content of the alkenyl groups serving as the reaction point of the cross-linking reaction is small and the flexibility of the cured product obtained after curing is enhanced.

An organopolysiloxane having an alkenyl group in the side chains of the molecular chain, in addition to having alkenyl groups at both terminals, can enhance the cross-linking density and the hardness of the cured product.

The number of alkenyl groups within one molecule of the component (A) can be appropriately determined in accordance with the required hardness of the cured product, the molecular weight of the component (A), and the like. The number of alkynyl groups within one molecule may be two or more, more preferably two or more and five or less, and most preferably two (having one alkynyl group at each terminal of the molecular chain).

The alkenyl group may be bonded to the silicon atom at the molecular chain terminal, to the silicon atom at a non-terminal molecular chain site (in the middle of the molecular chain), or to both.

The component (A) may be a polymer composed of a single type of siloxane unit or a copolymer composed of two or more types of siloxane units.

The viscosity of the component (A) at 25°C is 10 mPa·s or more and 10,000 mPa·s or less, preferably 50 mPa·s or more and 1,000 mPa·s or less, and more preferably 100 mPa·s or more and 500 mPa·s or less.

In order to adjust the viscosity (mixing viscosity), before curing, of the composition that is obtained by mixing the liquid compositions, two or more types of organopolysiloxanes having an alkenyl group and having different viscosities can also be used in combination.

Specifically, the component (A) is represented by the following general formula (1) as an average composition formula:

R¹ₐSiO_{(4-a) /2} ... (1)

(In the formula (1), R¹s are the same as or different from each other and each are an unsubstituted or substituted monovalent hydrocarbon group having 1 to 18 carbon atoms, a is 1.7 to 2.1, preferably 1.8 to 2.5, and more preferably 1.95 to 2.05.).

In one embodiment, at least two or more of the monovalent hydrocarbon groups represented by the aforementioned R¹ are selected from alkenyl groups such as a vinyl group, an allyl group, a propenyl group, an isopropenyl group, a butenyl group, an isobutenyl group, a hexenyl group, and a cyclohexenyl group. Groups other than these groups are substituted or unsubstituted monovalent hydrocarbon groups having 1 to 18 carbon atoms. Specifically, the aforementioned R¹ is selected from the group consisting of an alkyl group such as a methyl group, an ethyl group, a propyl group, an isopropyl group, a butyl group, an isobutyl group, a tert-butyl group, a pentyl group, a neopentyl group, a hexyl group, a 2-ethylhexyl group, a heptyl group, an octyl group, a nonyl group, a decyl group, and a dodecyl group; a cycloalkyl group such as a cyclopentyl group, a cyclohexyl group, and a cycloheptyl group; an aryl group such as a phenyl group, a tolyl group, a xylyl group, a biphenyl group, and a naphthyl group; an aralkyl group such as a benzyl group, a phenylethyl group, a phenylpropyl group, and a methylbenzyl group; and a halogen-substituted or cyano-substituted alkyl group in which a part or all of hydrogen atoms in the above-described hydrocarbon groups have been substituted with a halogen atom, a cyano group, or the like, such as a chloromethyl group, a 2-bromoethyl group, a 3,3,3-trifluoropropyl group, a 3-chloropropyl group, and a cyanoethyl group.

Examples of R¹s to be selected preferably include, as the two or more alkenyl groups required, a vinyl group, an allyl group, a propenyl group, an isopropenyl group, a 2-methyl-1-propenyl group, a 2-methylallyl group and a 2-butenyl group. A vinyl group is particularly preferable. Preferable examples of R¹ other than the alkenyl group include a methyl group and a phenyl group, with a methyl group being particularly preferable. In addition, it is preferable that 70 mol% or more of R¹s be a methyl group, in consideration of physical properties and economic efficiency of the cured product, and normally, it is preferable that 80 mol% or more of R¹s be a methyl group.

Specific examples of the molecular structure of the component (A) include a dimethylpolysiloxane with both molecular chain terminals blocked with a dimethylvinylsiloxy group, a dimethylsiloxane-methylphenylsiloxane copolymer with both molecular chain terminals blocked with a dimethylvinylsiloxy group, a dimethylsiloxane-methylvinylsiloxane copolymer with both molecular chain terminals blocked with a dimethylvinylsiloxy group, a dimethylsiloxane-methylvinylsiloxane-methylphyenylsiloxane copolymer with both molecular chain terminals blocked with a dimethylvinylsiloxy group, a dimethylsiloxane-methylvinylsiloxane copolymer with both molecular chain terminals blocked with a trimethylsiloxy group, an organopolysiloxane composed of a siloxane unit represented by the formula: (CH₃)₂ViSiO_{1/2}, a siloxane unit represented by the formula: (CH₃)₃SiO_{1/2}, and a siloxane unit represented by the formula: SiO_{4/2} (Vi in the formula represents a vinyl group), an organopolysiloxane in which part or all of the methyl groups in the above-mentioned organopolysiloxanes are substituted by an alkyl group such as an ethyl group or a propyl group, an aryl group such as a phenyl group or a tolyl group, and a halogenated alkyl group such as a 3,3,3-trifluoropropyl group, and mixtures of two or more of these organopolysiloxanes. From the viewpoint of enhancing elongation at the time of breakage of the cured product due to increased molecular chain length, a linear diorganopolysiloxane with one vinyl group at each molecular chain terminal is preferable.

These diorganopolysiloxanes may be commercially available or prepared by methods known to those skilled in the art.

The content of the organopolysiloxane of the component (A), relative to 100 parts by mass of the total amount of the components (A) and (B) in the thermally conductive silicone composition of the present invention, is preferably 20 parts by mass or more and less than 90 parts by mass, and more preferably 40 parts by mass or more and 80 parts by mass or less. When the content thereof falls within the aforementioned range, the viscosity of the entire composition can fall within an appropriate range, and the composition can have appropriate fluidity and maintain high thermal conductivity of the resulting cured product.

### Component (B):

The component (B) is a linear organopolysiloxane having at least two hydrogen atoms bonded to a silicon atom(s).

The component (B) may have a viscosity and a degree of polymerization which are not limited to particular values and which can be selected according to the required mixing viscosity of the composition. For example, the component (B) may have a viscosity, at 25°C, of 10 mPa·s or more and 10,000 mPa·s or less.

The component (B) is an organopolysiloxane having at least two hydrogen atoms bonded to a silicon atom(s) within one molecule, and serves as a cross-linking agent for curing the composition of the present invention.

The number of hydrogen atoms bonded to silicon atoms is not particularly limited as long as it is two or more, and may be two or more and four or less. Particularly preferably, the component (B) that is linear may have a hydrogen atom bonded to a silicon atom at each of both terminals of the molecular chain, and may have two hydrogen atoms bonded to one silicon atom in the molecule.

The component (B) may be any organopolysiloxane as long as it contains two or more hydrogen atoms (hydrosilyl groups) bonded to a silicon atom(s) within one molecule. Examples thereof that can be used include a methylhydrogenpolysiloxane, a dimethylsiloxane-methylhydrogensiloxane copolymer, a methylphenylsiloxane-methylhydrogensiloxane copolymer, a cyclic methylhydrogenpolysiloxane, and a copolymer composed of a dimethylhydrogensiloxy unit and an SiO_{4/2} unit. As the component (B), one type thereof may be used alone, or two or more types thereof may be used in combination as appropriate.

The molecular structure of the component (B) is not particularly limited, and may be, for example, a linear, branched, cyclic, or three-dimensional network structure. Specifically, the structure represented by the following average composition formula (2) can be used:

R³ₚH_{q}SiO_{(4-p-q)/2} (2)

(In the formula, R³ is an unsubstituted or substituted monovalent hydrocarbon group excluding an aliphatic unsaturated hydrocarbon group, p is 0 to 3.0, preferably 0.7 to 2.1, q is 0.0001 to 3.0, preferably 0.001 to 1.0, and p + q is a positive number satisfying 0.5 to 3.0, preferably 0.8 to 3.0.).

Examples of R³ in the formula (2) include unsubstituted or halogen-substituted monovalent hydrocarbon groups and the like having 1 to 10 carbon atoms, preferably 1 to 8 carbon atoms, excluding an aliphatic unsaturated hydrocarbon group. Specific examples thereof include an alkyl group such as a methyl group, an ethyl group, a propyl group, a butyl group, a pentyl group, a hexyl group, an isopropyl group, an isobutyl group, a tert-butyl group, and a cyclohexyl group; an aryl group such as a phenyl group, a tolyl group, and a xylyl group; an aralkyl group such as a benzyl group and a phenethyl group; and an alkyl halide group such as a 3-chloropropyl group and a 3,3,3-trifluoropropyl group. Among these, a methyl group, an ethyl group, a propyl group, a phenyl group, and a 3,3,3-trifluoropropyl group are preferable, and a methyl group is particularly preferable.

Specific examples of the component (B) include a dimethylsiloxane with both molecular chain terminals blocked with a dimethylhydrogensiloxy group, tris(dimethylhydrogensiloxy)methylsilane, tris(dimethylhydrogensiloxy)phenylsilane, a dimethylsiloxane-methylhydrogensiloxane copolymer with both molecular chain terminals blocked with a dimethylhydrogensiloxy group, a methylhydrogenpolysiloxane with both molecular chain terminals blocked with a dimethylhydrogensiloxy group, a methylhydrogenpolysiloxane with both molecular chain terminals blocked with a trimethylsiloxy group, a dimethylpolysiloxane with both molecular chain terminals blocked with a dimethylhydrogensiloxy group, a dimethylsiloxane-diphenylsiloxane copolymer with both molecular chain terminals blocked with a dimethylhydrogensiloxy group, a dimethylsiloxane-methylhydrogensiloxane copolymer with both molecular chain terminals blocked with a trimethylsiloxy group, a dimethylsiloxane-diphenylsiloxane-methylhydrogensiloxane copolymer with both molecular chain terminals blocked with a trimethylsiloxy group, a dimethylsiloxane-methylhydrogensiloxane copolymer with both molecular chain terminals blocked with a dimethylhydrogensiloxy group, a copolymer of a H(CH₃)₂SiO_{1/2} unit and an SiO₂ unit, a copolymer of a H(CH₃)₂SiO_{1/2} unit, a (CH₃)₃SiO_{1/2} unit, and an SiO₂ unit, and mixtures of two or more of these organopolysiloxanes.

In the composition described above, the content of the component (B) is preferably in such a range that the ratio of the number of hydrosilyl groups in the component (B) to that of the alkenyl group in the component (A) falls within the range of 1/5 to 7, more preferably within the range of 1/3 to 2, and still more preferably within the range of 2/5 to 1. When the content of the component (B) falls within the aforementioned range, the composition is sufficiently cured and the hardness of the entire composition becomes a more preferable range, so that cracks are less likely to occur when the cured product of the composition is used as a gap filler. In addition to these, there is an advantage that the composition dose not sag and can maintain its retention ability in the vertical direction even when the substrate is disposed in a vertical orientation (erected).

The number of hydrosilyl groups within one molecule can be appropriately determined in accordance with the required hardness of the cured product of the composition, the molecular weight of the component (A), and the like. The number of hydrosilyl groups within one molecule may be 2 or more, and from the viewpoint of processability, it is more preferably 2 or more and 5 or less, and even more preferably 2 or more and 3 or less. A linear organopolysiloxane having one hydrosilyl group at each terminal of the molecular chain used as the component (B) is most excellent in processability and workability during application of the uncured composition.

The hydrosilyl group in the component (B) may be present at the molecular chain terminals, may be present in side chains, or may be present both at the molecular chain terminals and in the side chains. It is preferable to use a mixture of an organopolysiloxane having one hydrosilyl group only at each molecular chain terminal and an organopolysiloxane having hydrosilyl groups only in the side chain of the molecular chain.

The component (B) may be an organopolysiloxane having hydrogen atoms bonded to silicon atoms only at both molecular chain terminals. An organopolysiloxane having a hydrosilyl group at each of both molecular chain terminals has a low hydrosilyl group content per unit weight, and it is possible to adjust the curing reaction rate at which a sufficient pot life can be ensured. Furthermore, there is an advantage that flexibility of the cured product obtained after curing is increased and adhesion to a substrate can be further enhanced.

The organopolysiloxane having SiH groups only at the molecular chain terminals has an advantage that the organopolysiloxane has high reactivity due to low steric hindrance, and the organopolysiloxane having SiH groups in the side chain(s) contributes to network construction by a cross-linking reaction and thus has an advantage of enhancing the strength of the cured product. In order to impart flexibility to the cured product after curing, an organopolysiloxane having SiH groups only at the molecular chain terminals is preferably used.

From the viewpoint of improving adhesion and heat resistance, the component (B) is most preferably a dimethylpolysiloxane having a dimethylhydrogensiloxy group at each terminals of the molecular chain.

The component (B) may include an organohydrogenpolysiloxane having a trimethylsiloxy group at both the molecular chain terminals and at least one aromatic group contained within the molecule. For economic reasons, the aromatic group is more preferably a phenyl group. An aromatic group-containing organohydrogenpolysiloxane and an aromatic group-free organohydrogenpolysiloxane may be used in combination.

The viscosity of the component (B) at 25°C is 10 mPa·s or more and 10,000 mPa·s or less, preferably 20 mPa·s or more and 5,000 mPa·s or less, and more preferably 30 mPa·s or more and 2,000 mPa·s or less.

In order to adjust the viscosity of the composition, which is the final product, it is also possible to use two or more types of organopolysiloxanes having two or more hydrosilyl groups and having respective different viscosities. The mixing viscosity of the composition may be in the range of 10 to 1,000 Pa·s, more preferably in the range of 20 to 500 Pa·s, and even more preferably in the range of 30 to 250 Pa·s.

The content of the organopolysiloxane of the component (B), relative to 100 parts by mass of the total amount of the components (A) and (B) in the composition of the present invention, is preferably 10 parts by mass or more and 80 parts by mass or less, and more preferably 20 parts by mass or more and 60 parts by mass or less. When the content falls within the aforementioned range, the hardness of the cured product of the composition can fall within an appropriate range. In addition, the cured product of the composition can exhibit flexibility and robustness.

### Component (C):

The component (C) is a hydrogenated cyclic siloxane represented by the following general formula (1).

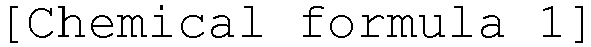

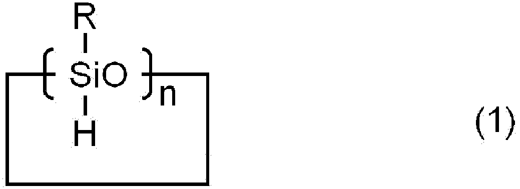

In the general formula (1), n is an integer of 4 or more and 8 or less, and R is a monovalent hydrocarbon group having 1 to 6 carbon atoms. One hydrocarbon group and one hydrogen atom are bonded to each silicon atom in the component (C). Even when a small amount is blended, the hydrogenated cyclic siloxane in which n is 4 or more and 8 or less can enhance the cross-linking density, and at the same time, can increase the curing reaction rate to be within a range, in which a sufficient pot life can be secured, by virtue of the steric hindrance caused by the cyclic structure.

If n is 3 or less, the blending amount in the thermally conductive silicone composition is likely to vary due to the low molecular weight and high volatility. Furthermore, if n is 9 or more, a ring-opening reaction is likely to occur, and the cyclic structure itself is likely to become unstable.

In a case where the thermally conductive silicone composition of the present invention is cured on a substrate at normal temperature (e.g., a temperature of 10°C or higher and 30°C or lower), and the cured product is then exposed to high temperatures (e.g., 190°C), the above-mentioned component (C) contained in the composition can reduce the change in Shore OO hardness (e.g., to a change ratio of 10% or less) as compared with that right after curing at normal temperature. Furthermore, the relatively low thermal expansion can reduce the occurrence of voids between the cured product and the substrate.

Compared with a case where a linear low-molecular-weight siloxane having hydrosilyl groups only at both terminals of the molecular chain is used, the use of the above-mentioned component (C) allows the curing reaction to proceed sufficiently and be completed within about 24 hours. After the curing reaction is completed, the cured product shows little change in the hardness even when being exposed to high temperatures, and voids are unlikely to occur.

Furthermore, the component (C) is effective even when a small amount is added. Accordingly, the thermally conductive filler can be blended in a larger relative amount.

In a case of using a linear siloxane having a large number of hydrosilyl groups within a molecule, with the hydrosilyl groups being bonded at both terminals of the molecular chain and in the side chains, there is a problem in that the curing reaction proceeds too quickly, and curing starts before the application to a substrate is completed. Compared to such a case, the reaction rate is reduced when using the above-mentioned component (C), making it possible to secure a pot life of about 30 min. to 1 hour at room temperature (e.g., about 23°C) after application to a substrate or the like.

Furthermore, the component (C), which is a hydrogenated siloxane in a cyclic form, used in the present invention has a smaller coefficient of thermal expansion, which occurs when a network is formed by the cross-linking reaction compared with a hydrogenated siloxane in a linear form. In this respect as well, the occurrence of voids can be reduced.

The term "pot life at room temperature" described herein refers to the usable time during which the thermally conductive silicone composition can be used particularly under the environment of a temperature of 23°C±5°C and a humidity of 50%RH±5%RH. In a case where the uncured thermally conductive silicone composition filled in a container is a two-component type, the term "usable time" is defined as the time from mixing the first liquid and the second liquid until the viscosity of the composition becomes twice the viscosity of the composition originally filled in the container. Note that the viscosity described herein is a value measured at 23°C, and, unless otherwise specified, at a shear rate of 10/s using a rotational viscometer (according to JIS K 7117-2).

As the component (C) of the present invention, any one of components in which n is 4, 5, 6, 7, or 8 may be blended, or two or more types of components in which n is 4 or more and 8 or less may be mixed and blended.

Three types of components with n = 5, 6, and 7 respectively may be mixed and blended, or four types of components with n = 4, 5, 6, and 7 respectively may be mixed and blended. In particular, when multiple types of components (C) are used, the components (C) with n = 5 and n = 6 are preferably used in a larger amount.

For example, with respect to 100 parts by mass of the total amount of the component (C), it is possible to include 0 parts by mass or more and less than 10 parts by mass of the component (C) with n = 4, 10 parts by mass or more and less than 70 parts by mass of the component (C) with n = 5, 10 parts by mass or more and less than 70 parts by mass of the component (C) with n = 6, 0 parts by mass or more and less than 30 parts by mass of the component (C) with n = 7, and 0 parts by mass or more and less than 10 parts by mass of the component (C) with n = 8.

It is particularly preferable to include, as the component (C) of the present invention, 1,3,5,7,9-pentamethylcyclopentasiloxane (HD5) and 1,3,5,7,9,11-hexamethylcyclohexasiloxane (HD6).

The blending amount of the component (C) can be appropriately determined according to the required cross-linking density and curing rate. However, the blending amount is preferably in a range of 0.5 parts by mass or more and 1.8 parts by mass or less relative to 100 parts by mass of the total amount of the component (A) and the component (B). The blending amount is more preferably 0.6 parts by mass or more and 1.5 parts by mass or less, and still more preferably 0.7 parts by mass or more and 1.3 parts by mass or less. Within the above-mentioned range, there is little change in the hardness of the cured product even after high temperature exposure, and good adhesion between the substrate and the cured product can be obtained. Thus, the cured product with excellent thermal conductivity (e.g., having a thermal conductivity of 5.0 W/m·K or more) can be formed.

If the blending amount of the component (C) is less than 0.5 parts by mass, the curing reaction proceeds insufficiently when the composition is applied to a substrate. Afterwards, when the composition is exposed to high temperatures, the uncured portion where the functional groups are not cross-linked, are cured, causing the hardness of the cured product to increase rapidly, and consequently producing voids. As a result, the thermal conductivity decreases.

If the blending amount of the component (C) is more than 1.8 parts by mass, the content of the component (E), i.e., the thermally conductive filler is relatively reduced, resulting in a decrease in the thermal conductivity of the cured product.

In the thermally conductive silicone composition of the present invention, the mass ratio of the component (A) to the component (B) (mass of the component (A) : mass of the component (B)) falls within the range of 80:20 to 50:50. Furthermore, the total amount of HD5 and HD6 as the component (C) is most preferably 0.5 parts by mass or more and 1.5 parts by mass or less relative to 100 parts by mass of the total amount of the component (A) and the component (B).

When the above-mentioned mass ratio falls within the above range and the total amount of HD5 and HD6 falls within the above range, the hardness of the cured product of the composition is within a suitable range, and when the cured product is used as a gap filler, the vibration absorption property thereof is also favorable.

### Component (D):

The addition reaction catalyst of the component (D) is a catalyst that promotes an addition-curing reaction between an alkenyl group bonded to a silicon atom in the component (A) described above and a hydrogen atom bonded to a silicon atom in the component (B) described above, and is a catalyst known to those skilled in the art. Examples of the component (D) include a platinum group metal such as platinum, rhodium, palladium, osmium, iridium, and ruthenium, and catalysts in which any of the aforementioned metals is supported by a particulate carrying material (for example, activated carbon, aluminum oxide, and silicon oxide).

Furthermore, specific examples of the component (D) include a platinum halide, a platinum-olefin complex, a platinum-alcohol complex, a platinum-alcoholate complex, a platinum-vinylsiloxane complex, dicyclopentadiene-platinum dichloride, cyclooctadiene-platinum dichloride, and cyclopentadiene-platinum dichloride.

In addition, from an economic viewpoint, a metal compound catalyst other than platinum group metals as described above may be used as the component (D). Examples of the iron catalyst for hydrosilylation include an iron-carbonyl complex catalyst, an iron catalyst having a cyclopentadienyl group as a ligand, an iron catalyst having a terpyridine-based ligand or a combination of a terpyridine-based ligand and a bistrimethylsilylmethyl group, an iron catalyst having a bisiminopyridine ligand, an iron catalyst having a bisiminoquinoline ligand, an iron catalyst having an aryl group as a ligand, an iron catalyst having a cyclic or acyclic olefin group with an unsaturated group, and an iron catalyst having a cyclic or acyclic olefinyl group with an unsaturated group. Other examples of the catalyst for hydrosilylation include a cobalt catalyst, a vanadium catalyst, a ruthenium catalyst, an iridium catalyst, a samarium catalyst, a nickel catalyst, and a manganese catalyst.

The blending amount of the component (D) is, in terms of the concentration of the catalyst metal element, in the range of preferably 0.5 ppm or more and 1,000 ppm or less, more preferably 1 ppm or more and 500 ppm or less, and still more preferably 1 ppm or more and 100 ppm or less relative to the total mass of the thermally conductive silicone composition, although an effective amount thereof according to the curing temperature and curing time desired depending on the use applications is used. If the blending amount is less than 0.5 ppm, the addition reaction becomes remarkably slow. If the blending amount exceeds 1,000 ppm, it is not economically preferable because of cost increase.

### Component (E):

The thermally conductive filler of the component (E) is a filling material component that improves the thermal conductivity of the thermally conductive silicone composition. The thermally conductive filler used in the present invention is at least one or more selected from the group consisting of a metal, a metal oxide, a metal hydroxide, a metal nitride, and a metal carbide. The specific surface area and the particle diameter of the thermally conductive filler are not particularly limited and can be appropriately determined according to the properties required for the thermally conductive silicone composition. For example, BET specific surface area may be 30 m²/g or less and the average particle diameter may be 1 to 100 µm. On the surface of the thermally conductive filler, OH groups may be generated due to the reaction with atmospheric water. The surface OH groups are dispersed uniformly in the thermally conductive silicone composition by interaction with the component (C), and the thermally conductive fillers hardly precipitate even when being stored for a long period of time. This is assumed to be due to the hydrogen bond formed by OH groups on the surface of the thermally conductive filler with the silanol group of the component (C), and due to the fact in that all the components (A), (B), and (C) have a siloxane skeleton and are highly compatible with one another.

The thermally conductive filler may be added in an amount required to increase the thermal conductivity of the cured product (for example, 5.0 W/m·K or higher), and for example, the content of the component (E) may be preferably 300 parts by mass or more and 2,500 parts by mass or less, more preferably 400 parts by mass or more and 2,000 parts by mass or less, and even more preferably 500 parts by mass or more and 1,800 parts by mass or less, relative to 100 parts by mass of the total amount of the components (A) and (B).

When the content of the component (E) falls within the above-mentioned range, the thermally conductive silicone composition as a whole has sufficient thermal conductivity, is easy to mix at the time of blending, and maintains flexibility even after curing. In addition, since the component (E) contained in such an amount does not excessively increase the specific gravity, the resulting composition is more suitable as a thermally conductive silicone composition for forming a cured product that is required to have high thermal conductivity and weight reduction. If the content of the component (E) is too small, it becomes difficult to sufficiently increase the thermal conductivity of a cured product obtained from the thermally conductive silicone composition, whereas if the content of the component (E) is too large, the resulting silicone composition becomes highly viscous, and there is a possibility that it becomes difficult to uniformly apply the thermally conductive silicone composition, resulting in problems such as an increase in the thermal resistance value of the cured product of the composition and a decrease in flexibility of the cured product.

The shape of the thermally conductive filler may be, for example, a spherical shape, an amorphous shape, a fine powder, a fibrous shape, a scaly shape, or the like. In order to blend the thermally conductive filler in an amount required to enhance the thermal conductivity of the cured product of the composition, the thermally conductive filler preferably has a spherical shape, and the average particle diameter thereof may be 1 to 100 µm. Herein, the spherical shape may be not only a true spherical shape but also a rounded shape.

The BET specific surface area of the thermally conductive filler is not particularly limited, and may be, for example, 0.01 m²/g or more and 500 m²/g or less, preferably 0.03 m²/g or more and 50 m²/g or less, and even more preferably 0.05 m²/g or more and 10 m²/g or less.

The thermally conductive fillers preferably have a thermal conductivity of 10 W/m·K or more. If the thermal conductivity is less than 10 W/m·K, the thermal conductivity itself of the thermally conductive silicone composition may be reduced. In particular, if the cured product requires electrical insulation, it is conceivable to select a nonconductive thermally conductive filler.

The component (E) may preferably be a metal oxide, a metal hydroxide, a nitride, or a mixture thereof, and may be an amphoteric hydroxide or an amphoteric oxide in some cases. Specifically, it is preferable to use one or more types selected from the group consisting of aluminum oxide, aluminum hydroxide, magnesium oxide, magnesium hydroxide, zinc oxide, aluminum nitride, and boron nitride. Among these, the component (E) preferably contains at least one selected from aluminum hydroxide and aluminum oxide.

It should be noted that aluminum oxide is an insulating material, has relatively good compatibility with the components (A) and (B), can be industrially selected from a wide variety of particle diameters, is a readily available resource, is relatively inexpensive, and is therefore suitable as the thermally conductive filler.

When spherical aluminum oxide is used as the component (E), α-alumina obtained by high-temperature thermal spraying or hydrothermal treatment of alumina hydrate may be used.

The average particle diameter of the component (E) may be in the range of 1 µm or more and 100 µm or less, more preferably 2 µm or more and 80 µm or less, and even more preferably 2 µm or more and 70 µm or less. If the average particle diameter is too small, the fluidity of the thermally conductive silicone composition is lowered. If the average particle diameter is too large, dispensing properties are impaired, and there is a possibility that problems could occur such as the scraping of the coating apparatus due to the filler being caught by the sliding portion of the coating apparatus. In the present invention, the average particle diameter of the component (E) is defined by D50 (or median diameter) that is the 50% particle diameter in the volume-based cumulative particle size distribution measured by a laser diffraction particle size measuring device.

As the component (E), a spherical thermally conductive filler may be used, or a thermally conductive filler other than a spherical shape such as an amorphous shape, a powdery shape, a fibrous shape, or a plate shape may be used in combination. When at least two or more types of thermally conductive fillers having different shapes are used in combination, the composition during application can be filled while the fillers are packed in a state that is almost the closest packed, so that thermal conductivity is advantageously further increased. When the proportion of a spherical thermally conductive filler is 30% by mass or more relative to 100% by mass of the whole component (E) in a case of using the spherical thermally conductive filler in combination with a thermally conductive filler other than spherical fillers, thermal conductivity can be further increased.

In the thermally conductive silicone composition according to the present invention, a filler other than the component (E) can be further added. Examples of the filler other than the component (E) may include fillers having non-thermal conductivity such as fumed silica, crystalline silica, precipitating silica, a hollow filler, silsesquioxane, magnesium carbonate, calcium carbonate, zinc carbonate, lamellar mica, carbon black, diatomaceous earth, glass fibers, a silicone rubber powder, and a silicone resin powder, and thermally conductive fillers having a BET specific surface area of 500 m²/g or more.

When a filler having a BET specific surface area of more than 500 m²/g is mixed, the viscosity of the thermally conductive silicone composition is increased, the adhesion of the thermally conductive silicone composition after curing to a substrate is impaired, and flexibility tends to be reduced. As a result, heat dissipation properties may be reduced. When the composition is densely filled with a bulky filler, the motion of silicone rubber molecules in the composition is hindered, and resiliency is impaired. The content of the filler having a BET specific surface area of 500 m²/g or more in the thermally conductive silicone composition according to the present invention needs to be 3 parts by mass or less relative to 100 parts by mass of the total amount of the components (A) and (B).

In the present invention, the BET specific surface area of the component (E) is a value obtained by measuring the amount of gas physically adsorbed to the surface of particles in a low-temperature state and calculating a specific surface area.

In the thermally conductive silicone composition of the present invention, as an additional optional component other than the aforementioned components (A) to (E), a conventionally known additive for use in a silicone rubber or gel can be used as long as the object of the present invention is not impaired. Examples of such additives include a cross-linking agent, an organosilicon compound or an organosiloxane (also referred to as a silane coupling agent) that produces silanols by hydrolysis, a condensation catalyst, an adhesive aid, a pigment, a dye, a curing inhibitor, a heat-resistance imparting agent, a flame retardant, an antistatic agent, a conductivity imparting agent, an airtightness improving agent, a radiation shielding agent, an electromagnetic wave shielding agent, a preservative, a stabilizer, an organic solvent, a plasticizer, a fungicide, an organopolysiloxane that contains one hydrogen atom or alkenyl group bonded to a silicon atom within one molecule and that contains no other functional groups, and a non-functional organopolysiloxane that contains neither a silicon atom-bonded hydrogen atom nor a silicon atom-bonded alkenyl group. As these optional components, one type thereof may be used alone, or two or more types thereof may be used in combination as appropriate.

### Cross-linking agent:

In the thermally conductive silicone composition of the present invention, since the component (C) serves as a cross-linking agent, another cross-linking agent may not be additionally blended although an optional cross-linking agent may be separately blended. As the cross-linking agent, an organohydrogenpolysiloxane other than those used as the components (B) and (C) can be used. The cross-linking agent forms a cured product by an addition reaction with an alkenyl group, and may have a hydrogen atom (hydrosilyl group) bonded to at least one or more silicon atoms in a side chain in the molecule. The cross-linking agent preferably has three or more hydrosilyl groups within one molecule and has at least one hydrosilyl group in a side chain within the molecule.

The cross-linking agent, which may be used in the present invention, is more preferably an organohydrogenpolysiloxane having 5 or more hydrosilyl groups, and may have 10 or more and 15 or less hydrosilyl groups. The organohydrogenpolysiloxane that is the cross-linking agent has at least two hydrosilyl groups present in its side chain. The number of hydrosilyl groups at a molecular chain terminal may be zero or more and two or less, and is, from an economic perspective, preferably two. The molecular structure of the organohydrogenpolysiloxane may be any of linear, cyclic, branched, and three-dimensional network structures. The position of the silicon atom to which a hydrogen atom is bonded is not particularly limited, and may be at a molecular chain terminal, at a non-terminal molecular chain site (in the middle of the molecular chain), or in a side chain. Other conditions, the type of the organic group other than a hydrosilyl group, the bonding position, the degree of polymerization, the structure, and the like in the organohydrogenpolysiloxane serving as the cross-linking agent are not particularly limited. Two or more types of organohydrogenpolysiloxanes may be used.

The cross-linking agent does not necessarily need to be blended. When the cross-linking agent is blended, the blending amount thereof may be 0 parts by mass or more and 10 parts by mass or less, more preferably 1 part by mass or more and 6 parts by mass or less, and even more preferably 1 part by mass or more and 4 parts by mass or less, relative to 100 parts by mass of the total amount of the component (A) and the component (B).

### Silane coupling agent:

Examples of the silane coupling agent include an organosilicon compound and an organosiloxane having an organic group and a silicon atom-bonded alkoxy group within one molecule, the organic group including an epoxy group, an alkyl group, an aryl group, a vinyl group, a styryl group, a methacryl group, an acryl group, an amino group, an isocyanurate group, a ureide group, a mercapto group, an isocyanate group, and an acid anhydride. An example of the silane coupling agent is a silane compound such as octyltrimethoxysilane, octyltriethoxysilane, decyltrimethoxysilane, decyltriethoxysilane, dodecyltrimethoxysilane, dodecyltriethoxysilane, vinyltrimethoxysilane, 3-glycidoxypropyltrimethoxysilane, p-styryltrimethoxysilane, 3-methacryloxypropyltrimethoxysilane, 3-acryloxypropyltrimethoxysilane, 3-aminopropyltrimethoxysilane, 3-aminopropyltriethoxysilane, tris-(trimethoxysilylpropyl)isocyanurate, 3-ureidopropyltrialkoxysilane, 3-mercaptopropylmethyldimethoxysilane, 3-isocyanatopropyltriethoxysilane, and 3-trimethoxysilylpropyl succinic anhydride. The silane compound may be a compound having no hydrosilyl group. One type thereof may be used alone, or two or more types thereof may be used in combination as appropriate. When the surface of the thermally conductive filler is treated with the silane coupling agent, the affinity with the silicone polymer can be improved, the viscosity of the composition can be decreased, and the filling properties of the thermally conductive filler can be improved. Therefore, when a larger amount of filler is added, thermal conductivity can be improved.

A silanol produced by hydrolysis can react with and bond with a condensable group (for example, a hydroxyl group, an alkoxy group, an acid group, or the like) present on the surface of a metal substrate or an organic resin substrate. The silanol and the condensable group undergo a reaction with, and are bonded to each other, by the catalytic effect of the condensation catalyst, to be described later, thereby progressing the adhesion of the cured product to various substrates.

As the blending amount of the silane coupling agent relative to that of the thermally conductive filler, an effective amount according to curing temperature or curing time desired depending on the use applications is used. A general optimum amount is usually 0.5 wt% or more and 2 wt% or less relative to the amount of the thermally conductive filler. A standard of a required amount is calculated by the following expression. The silane coupling agent may be added in an amount one to three times the standard of the required amount.

Required amount (g) of silane coupling agent = Mass (g) of thermally conductive filler × Specific surface area (m²/g) of thermally conductive filler / Minimal covering area specific to silane coupling agent (m²/g)

### Condensation catalyst:

As necessary, a condensation catalyst may be used together with the silane coupling agent described above. As the condensation catalyst, a compound of a metal selected from magnesium, aluminum, titanium, chromium, iron, cobalt, nickel, copper, zinc, zirconium, tungsten, and bismuth can be used. Preferable examples of the condensation catalysts include metal compounds such as organic acid salts, alkoxides, and chelate compounds, of trivalent aluminum, trivalent iron, trivalent cobalt, divalent zinc, tetravalent zirconium, and trivalent bismuth. Specific examples thereof include an organic acid such as octylic acid, lauric acid, and stearic acid, an alkoxide such as a propoxide and a butoxide, and a multidentate ligand chelating compound such as catechol, crown ether, a polyvalent carboxylic acid, hydroxy acid, diketone, and keto acid. Here, a plurality of types of ligands may be bonded to one metal. In particular, a compound of zirconium, aluminum, or iron, which is likely to give stable curability even when the chemical composition and use conditions are somewhat different, is preferred. In addition, examples of the more desirable compounds include a butoxide of zirconium and a trivalent chelate compound of aluminum or iron including multidentate ligands such as a malonic acid ester, an acetoacetic acid ester, an acetylacetone, or a substituted derivative thereof. In the case of a trivalent aluminum or iron metal compound, an organic acid having 5 to 20 carbon atoms, such as octylic acid, may be preferably used. The polydentate ligand and the organic acid may be bonded to one metal, and the resulting structure may also be adopted.

Examples of the aforementioned substituted derivative include those in which a hydrogen atom contained in the compound described above is substituted with an alkyl group such as a methyl group or an ethyl group, an alkenyl group such as a vinyl group or an allyl group, an aryl group such as a phenyl group, a halogen atom such as a chlorine atom or a fluorine atom, a hydroxyl group, a fluoroalkyl group, an ester group-containing group, an ether-containing group, a ketone-containing group, an amino group-containing group, an amide group-containing group, a carboxylic acid-containing group, a nitrile group-containing group, an epoxy group-containing group, or the like. Specific examples thereof include 2,2,6,6-tetramethyl-3,5-heptanedione and hexafluoropentanedione.

### Adhesive aid:

The adhesive aid is preferably an organosilicon compound or an organosiloxane having an organic functional group. Herein, it is preferable that the organic functional group be an alkoxy group bonded to a silicon atom (silicon atom-bonded alkoxy group). Examples of the atom-bonded alkoxy group include a methoxy group, an ethoxy group, and a propoxy group. Examples of the silyl group containing the silicon atom-bonded alkoxy group include an alkyldialkoxysilyl group such as a methyldimethoxysilyl group, an ethyldimethoxysilyl group, a methyldiethoxysilyl group, and an ethyldiethoxysilyl group. In this case, the alkoxy group man be bonded to a silicone atom via another group such as an alkylene group.

In addition to the alkoxy group, examples of the organic group contained in the adhesive aid include an alkenyl group such as a vinyl group, a (meth)acryl group, an acryl group, a hydrosilyl group, an isocyanate group, an epoxy group, an alkyl group, and an aryl group. Furthermore, an organosilicon compound or an organosiloxane having at least one organic group such as an epoxy group, an alkyl group, or an aryl group and at least two silicon atom-bonded alkoxy groups within one molecule are more preferred.

In a case where an epoxy group is contained as another organic group, the epoxy group may be an epoxy group having a linear or branched alkyl group having 1 to 20 carbon atoms or having an aromatic ring, and the adhesive and can contain two to three epoxy groups within one molecule. Examples of the epoxy group-containing group include a glycidoxyalkyl group such as a glycidoxypropyl group, and an epoxy-containing cyclohexylalkyl group such as a 2,3-epoxycyclohexylethyl group and a 3,4-epoxycyclohexylethyl group.

Specific examples of the adhesive aid include tetraethoxysilane, 3-glycidoxypropyltrimethoxysilane, 3-glycidoxypropyltriethoxysilane, an oligomer of 3-glycidoxypropyltrimethoxysilane, an oligomer of 3-glycidoxypropyltriethoxysilane, a methacryloxysilane such as 3-methacryloxypropyltrimethoxysilane and 3-methacryloxypropyltriethoxysilane, 3-trimethoxysilylpropylsuccinic anhydride, and a furandione such as dihydro-3-(3-(triethoxysilyl)propyl)-2,5-furandione.

### Pigment:

Examples of the pigment include titanium oxide, alumina silicic acid, iron oxide, zinc oxide, calcium carbonate, carbon black, a rare earth oxide, chromium oxide, a cobalt pigment, ultramarine blue, cerium silanolate, aluminum oxide, aluminum hydroxide, titanium yellow, barium sulfate, precipitated barium sulfate, and mixtures thereof.

The blending amount of the pigment is preferably in the range of 0.001% to 5% relative to the total mass of the thermally conductive silicone composition although an effective amount thereof according to the curing temperature and curing time desired depending on the use applications is used. The amount of the pigment is preferably in the range of 0.01% or more and 2% or less, and more preferably 0.05% or more and 1% or less. If the amount is less than 0.001%, the resulting composition is insufficiently colored, so it is difficult to visually distinguish the first liquid from the second liquid. On the other hand, if the amount exceeds 5%, the cost will increase, which is not economically preferable.

### Curing inhibitor:

The curing inhibitor has an ability of adjusting the curing rate of the addition reaction, and any curing inhibitor conventionally known in the art can be used as the compound having a curing suppressing effect. Examples thereof include an acetylene-based compound, hydrazines, triazoles, phosphines, and mercaptans. Specific examples of such compounds include a phosphorus-containing compound such as triphenylphosphine, a nitrogen-containing compound such as tributylamine, tetramethylethylenediamine, and benzotriazole, a sulfur-containing compound, an acetylene-based compound, a compound containing two or more alkenyl groups, a hydroperoxy compound, a maleic acid derivative, and silane and a silicone compound having an amino group.

The blending amount of the curing inhibitor is preferably in the range of 0.1 parts by mass to 15 parts by mass relative to 100 parts by mass of the total amount of the components (A) and (B), although an effective amount thereof depending on the curing temperature and curing time desired depending on the use applications is used. The amount is preferably in the range of 0.2 parts by mass to 10 parts by mass, and more preferably in the range of 0.5 parts by mass to 5 parts by mass. If the amount is less than 0.1 parts by mass, the addition reaction becomes remarkably accelerated, and the curing reaction proceeds during coating, which may deteriorate the workability. On the other hand, if the amount exceeds 10 parts by mass, the addition reaction becomes slow, so a pump-out phenomenon may occur.

Specific examples of the curing inhibitors include various "ene-yne" systems such as 3-methyl-3-pentene-1-yne and 3,5-dimethyl-3-hexene-1-yne; an acetylenic alcohol such as 3,5-dimethyl-1-hexin-3-ol, 1-ethynyl-1-cyclohexanol, and 2-phenyl-3-butyn-2-ol; well-known maleates and fumarates such as a dialkyl maleate, a dialkenyl maleate, a dialkoxyalkyl maleate, a dialkyl fumarate, a dialkenyl fumarate, and a dialkoxyalkyl fumarate; and those containing cyclovinylsiloxane.

In particular, when the thermally conductive silicone composition according to the present invention is used for forming a gap filler, curing of the composition proceeds at room temperature. In such cases, a silicone compound having a low viscosity (for example, a viscosity of 100 mPa·s or less) and having three or more vinyl groups is preferably used as the curing inhibitor.

### Heat-resistance imparting agent:

Examples of the heat-resistance imparting agent include cerium hydroxide, cerium oxide, iron oxide, fumed titanium dioxide, and mixtures thereof.

### Airtightness improving agent:

As the airtightness improving agent, any agent may be used as long as it has an effect of reducing the air permeability of the cured product, and any organic or inorganic substance may be used. Specific examples thereof include a urethane, a polyvinyl alcohol, a polyisobutylene, an isobutylene-isoprene copolymer, talc having a plate-like shape, mica, glass flakes, boehmite, powders of various metal foils and metal oxides, and mixtures thereof.

The thermally conductive silicone composition according to the present invention may not contain an organosilicon compound having one or more alkenyl groups and one or more alkoxy groups bonded to silicon atoms within one molecule. When a compound having an alkenyl group and an alkoxy group bonded to a silicon atom within one molecule is contained in the composition, when the compound is cured and used as a gap filler, the compound acts as a component for bonding the substrate to the gap filler. The composition according to the present invention that does not contain such a component can further reduce deformation, damage, or the like of batteries etc., when the cured product is exposed to high temperatures to be peeled off from a substrate.

The thermally conductive silicone composition of the present invention may contain any one or more selected from the group consisting of octamethylcyclotetrasiloxane (D4), decamethylcyclopentasiloxane (D5), dodecamethylcyclohexasiloxane (D6), tetradecamethylcycloheptasiloxane (D7), and hexadecamethylcyclooctasiloxane (D8).

The total content of (D4), (D5), (D6), (D7), and (D8) may be less than 0.1 parts by mass (i.e., less than 1,000 ppm) relative to 100 parts by mass of the total amount of the components (A) and (B).

When the total content of (D4) to (D8) contained in the thermally conductive silicone composition falls within the aforementioned range, the flashing point of the whole composition may be increased, and safety during storage may be improved. Furthermore, the cured product obtained by curing the composition can be provided in a manner wherein the cured product is unlikely to cause a contact failure with an electronic part and the like.

A thermally conductive silicone composition containing (D4) to (D8) in an amount of less than 0.1 parts by mass as the total content of (D4) to (D8) relative to 100 parts by mass of the total amount of the components (A) and (B) can be produced by using the component (A) in which the total content xA of (D4) to (D8) is less than 0.1 parts by mass, the component (B) in which the total content xB of (D4) to (D8) is less than 0.1 parts by mass, and the component (C) in which the total content xC of (D4) to (D8) is less than 0.1 parts by mass such that the total content xA + xB + xC is less than 0.1 parts by mass.

The respective contents of (D4) to (D8) are measured by gas chromatography. The measurement condition of gas chromatography may be appropriately selected in accordance with a conventionally known method.

Use of the components (A), (B), and (C) in which the total content of (D4) to (D8) are small can make the total content of (D4) to (D8) in the thermally conductive silicone composition fall within the aforementioned range. As a method for reducing the contents of (D4) to (D8) in the components (A) to (C), a method of subjecting a component to a heating treatment under reduced pressure is widely known. For example, it is preferable that a heating treatment under reduced pressure be performed at 180°C and 20 mmHg for about 8 hours during production of raw materials for the components (A) to (C) .

The cured product obtained by curing the thermally conductive silicone composition according to the present invention can have:
a hardness change ratio of 10% or less according to the hardness change ratio evaluation method described below; and
a thermal conductivity of 5.0 W/m·k or more according to the thermal conductivity measurement method described below. Hardness change ratio evaluation method:

The cured product obtained by curing the composition at 23°C for 24 hours is measured for Shore OO hardness according to the ASTM D 2240 standard using a Shore OO hardness durometer. This value is defined as an initial Shore OO hardness.

The cured product obtained by curing the composition at 23°C for 24 hours is exposed to 190°C for 500 hours and then cooled to 23°C, and the resulting cured product is measured for the Shore OO hardness according to the ASTM D 2240 standard using the Shore OO hardness durometer. This value is defined as a Shore OO hardness after high temperature exposure.

A change ratio of the Shore OO hardness after high temperature exposure relative to the initial Shore OO hardness is calculated.

### Thermal conductivity measurement method:

The thermally conductive silicone composition is press-molded into a columnar shape with a diameter of 30 mm and a height of 6 mm, and then is cured under a condition of 23°C for 24 hours to produce a columnar cured product. The thermal conductivity of the cured product is measured by the hot disk method according to ISO 22007-2.

The term "hardness" described herein refers to a resistance to permanent indentation when measured under specified conditions. For example, the Shore OO hardness, also referred to as hardness ShOO or as Shore scale OO hardness, is determined according to the ASTM D 2240 standard using the Shore OO hardness durometer.

The thermally conductive silicone composition according to the present invention is an addition-curable composition and may be a one-component composition or a two-component composition. The one-component composition can have an improved storage property when the composition is appropriately designed to be cured by heat.

In the case of a two-component composition including a first liquid and a second liquid as a set, it becomes possible to further enhance storage stability without these contrivances, and it is easy to obtain a composition that cures at room temperature (e.g., 23°C). In that case, the thermally conductive silicone composition according to the present invention can be dispensed into the first liquid and the second liquid, for example as follows.

For example, the first liquid does not contain the component (B) and contains the component (D), and the second liquid contains the components (B) and (C) and does not contain the component (D). The components (A) and (E) and any optionally blended component(s) may be blended in the first liquid, the second liquid, or both.

When the component (D) and the components (B) and (C) are contained in respectively separated liquids, the thermally conductive silicone composition according to the present invention may be prepared as a multi-component composition in which respective components of the composition are dispensed in three or more separate liquids.

Accordingly, a method for producing a two-component thermally conductive silicone composition of the present invention includes:
a first step of mixing the component (A), i.e., an alkenyl group-containing organopolysiloxane, the component (D), i.e., an addition reaction catalyst, and the component (E), i.e., a thermally conductive filler to obtain a first liquid; and
a second step of mixing the component (A), i.e., an alkenyl group-containing organopolysiloxane, the component (B), i.e., a linear organopolysiloxane having two or more hydrosilyl groups within one molecule, the component (C), i.e., a hydrogenated cyclic siloxane, and the component (E), i.e., a thermally conductive filler to obtain a second liquid.

The amount of each component to be dispensed into the first liquid and the second liquid is not particularly limited as long as the component (D) is dispensed into the first liquid and the components (B) and (C) are dispensed into the second liquid. For example, in a case where the first liquid and the second liquid are mixed in an equivalent amount, the amounts of respective components to be dispensed are set to the following amounts relative to 100 parts by mass of the component (A) to be dispensed into the first liquid. It should be noted that the amount ratio of the first liquid to the second liquid can be set freely depending on use applications.
First Liquid:
   Component (A): 100 parts by mass
   Component (D): 15 ppm or more and 30,000 ppm or less
   Component (E): 500 parts by mass or more and 3,000 parts by mass or less
   Optional components:
      Silane coupling agent: 0 wt% or more and 2 wt% or less relative to thermally conductive filler
      Condensation catalyst: 0 parts by mass or more and 20 parts by mass or less
      Curing inhibitor : 0 parts by mass or more and 20 parts by mass or less
      Pigment: 0 parts by mass or more and 20 parts by mass or less
Second liquid:
   Component (A): 0 parts by mass or more and 80 parts by mass or less
   Component (B): 20 parts by mass or more and 100 parts by mass or less
   Component (C): 0.5 parts by mass or more and 1.8 parts by mass or less
   Component (E): 500 parts by mass or more and 3,000 parts by mass or less
   Optional components:
      Cross-linking agent: 0 parts by mass or more and 10 parts by mass or less
      Silane coupling agent : 0 wt% or more and 2 wt% or less relative to thermally conductive filler
      Pigment: 0 parts by mass or more and 20 parts by mass or less

The pigment may be contained in either the first liquid or the second liquid, or both.

The present invention also provides a method for producing a gap filler, including:
a mixing step of mixing the first liquid and the second liquid described above to obtain a thermally conductive silicone composition;
a filling step of filling a gap between a heat dissipating body and a heat generating body with the thermally conductive silicone composition obtained in the mixing step; and
a curing step of curing the uncured thermally conductive silicone composition filled in the filling step.

In the filling step, the thermally conductive silicone composition in an uncured state is filled in a gap between a heat generating body and the heat dissipating body (for example, a gap between a heat sink and a reactor or between a heat sink and a housing containing a reactor) so as to be applied to a substrate (which is a surface of the heat generating body or the heat dissipating body). When the filling step is performed at, for example, 0°C or higher and 60°C or lower, a non-flowable cured product is formed within approximately 120 minutes after the filling (curing step).

The temperature during the filling step is not particularly limited, and may be, for example, room temperatures of 0°C or higher and 30°C or lower. In order to reduce any thermal damage to the substrate or the like, the temperature may be 10°C or higher and 30°C or lower. In particular, when the substrate is made of a polycarbonate or a PET having poor heat resistance, it is preferable not to heat the substrate.

The curing step may be performed without heating and at room temperature (for example, a temperature of 10°C or higher and 30°C or lower). If the composition is a heat-curable composition, the composition may be first applied to a substrate or the like and then heated. Heating the composition for curing may be performed by utilizing heat radiated from a heat dissipating body. The temperature during heat curing may be, for example, 40°C or higher and 180°C or lower, and preferably 50°C or higher and 150°C or lower.

The substrate to which the thermally conductive silicone composition is applied is not particularly limited, and examples thereof include ceramics, resins, glass, and metals such as aluminum, magnesium, iron, nickel, titanium, stainless steel, copper, lead, zinc, molybdenum, and silicon, and a material obtained by coating any of these metals with enamel.

Preferable examples of the ceramic substrate to which the cured thermally conductive silicone composition of the present invention is bonded include those made of an oxide, a carbide, and a nitride, such as aluminum oxide, aluminum nitride, alumina zirconia, zirconium oxide, zinc oxide, barium titanate, lead zirconate titanate, beryllium oxide, silicon nitride, and silicon carbide.

Preferable examples of the resin substrate to which the cured thermally conductive silicone composition is bonded include resin substrates made of a polyester, an epoxy resin, a polyamide, a polyimide, an ester-based resin, a polyacrylamide, an acrylonitrile-butadiene-styrene (ABS) resin, a styrene-based resin, a polypropylene, a polyacetal, an acrylic resin, a polycarbonate (PC), a polyethylene terephthalate (PET), a polybutylene terephthalate (PBT), a polyether-ether ketone (PEEK), a polymethyl methacrylate (PMMA), and a silicone resin.

In a case where the cured product obtained by curing the thermally conductive silicone composition of the present invention is a gap filler for battery units, a battery unit housing, which is a substrate to be bonded, may have an iron surface at least partially coated with a cationic electrodeposition coating on the substrate surface, and a heat sink may have an aluminum surface.

The thermally conductive silicone composition may be first applied to a heat dissipating body and then a heat generating body may be disposed so as to sandwich the composition with the heat dissipating body, or the thermally conductive silicone composition may be first applied to a heat generating body and then a heat dissipating body may be disposed so as to sandwich the composition with the heat generating body. Alternatively, the thermally conductive silicone composition may be injected into a gap between a heat generating body and a heat dissipating body.

When the cured product of the thermally conductive silicone composition of the present invention is used as a gap filler, the heat generated by a heat generating body can diffuse to a heat dissipating body such as a heat sink through the gap filler having good heat dissipation properties, making it possible to fabricate a power control unit with excellent heat dissipation properties.

The present invention also provides a method for reducing the occurrence of voids in an adhesion part between a cured product and a substrate after the cured product is exposed to a high temperature of 190°C or higher, in which the cured product is obtained by applying a thermally conductive silicone composition to the substrate and curing the applied composition, and the thermally conductive silicone composition is obtained by blending, in a thermally conductive silicone composition including an alkenyl group-containing organopolysiloxane as the component (A), a linear organopolysiloxane having two or more hydrosilyl groups within one molecule as the component (B), an addition reaction catalyst as the component (D), and a thermally conductive filler as the component (E), a hydrogenated cyclic siloxane including at least one selected from 1,3,5,7,9-pentamethylcyclopentasiloxane (HD5) and 1,3,5,7,9,11-hexamethylcyclohexasiloxane (HD6) as the component (C).

### [Examples]

The present invention will be specifically described on the basis of examples, but the present invention is not limited to the following examples. Table 1 shows the blending ratio of each component in Examples and Comparative Examples and evaluation results. Numerical values of the blending ratio shown in Table 1 are shown in a unit of "part(s) by mass". The hydrogen content shown in Table 1 is a hydrogen content (% by mass) relative to 100 parts by mass of the total amount of the component (A) and the component (B) in a first liquid or a second liquid.

### Workability evaluation:

The first liquid and the second liquid shown in each of Examples and Comparative Examples were weighed at a ratio of 1:1, sufficiently mixed by a stirrer, and then degassed by a vacuum pump to produce each thermally conductive silicone composition. The viscosity of each thermally conductive silicone composition at 23°C and a shear rate of 1/s or 10/s was measured using a rotational viscometer (JIS K 7117-2).

Workability was evaluated as good when the viscosity at a shear rate of 1/s was less than 1,000 Pas and the viscosity at a shear rate of 10/s was less than 200 Pas.

### Thermal conductivity evaluation:

The first liquid and the second liquid shown in each of Examples and Comparative Examples were weighed at a ratio of 1:1, sufficiently mixed by a stirrer, and then degassed by a vacuum pump. The resulting thermally conductive silicone composition was press-molded into a columnar shape with a diameter of 30 mm and a height of 6 mm, and then cured under a condition of 23°C for 24 hours to produce a columnar cured product. The thermal conductivity of the cured product was measured by a measurement device (TPS-500 manufactured by Kyoto Electronics Manufacturing Co., Ltd.) on the basis of a hot disc method according to ISO 22007-2. A sensor was disposed between two columnar cured products produced as described above, and the thermal conductivity was measured by the measurement device.

The thermal conductivity is preferably 5.0 W/m·k or more.

### Hardness change ratio evaluation:

The first liquid and the second liquid shown in each of Examples and Comparative Examples were weighed at a ratio of 1:1, sufficiently mixed by a stirrer, and then degassed by a vacuum pump. The resulting thermally conductive silicone composition was press-molded into a columnar shape with a diameter of 30 mm and a height of 6 mm, and then cured under a condition of 23°C for 24 hours to produce a columnar cured product. A Shore OO hardness of the cured product was measured using a Shore OO hardness durometer (model number GS754, manufactured by TECLOCK Co., Ltd.) according to the ASTM D 2240 standard by sandwiching a sensor between the two columnar cured products prepared as described above. The obtained value was defined as "Shore OO hardness (initial)".

After cured under the condition of 23°C for 24 hours in the same manner as described above, the cured product was exposed to 190°C for 500 hours and the Shore OO hardness of the cured product was measured under the above-mentioned conditions. The obtained value was defined as "Shore OO hardness (after high temperature exposure)".

When the hardness change ratio of the "Shore OO hardness (after high temperature exposure)" was 10% or less based on the "Shore OO hardness (initial)", the hardness change after high temperature exposure was evaluated as small.

### Method for measuring shear adhesion stress:

The first liquid and the second liquid shown in each of Examples and Comparative Examples were weighed at a ratio of 1:1, sufficiently mixed by a stirrer, and then degassed by a vacuum pump. After preparing aluminum plates of about 60 cm long × 25 cm wide × 2 mm thick as substrates, the resulting thermally conductive silicone composition was applied to the first substrate with an area of about 25 mm long and about 25 mm wide, and with a thickness of about 1 mm. The applied product was sandwiched between the first substrate and another substrate, and cured at 23°C for 24 hours. The resulting product was used as a test piece before high temperature exposure.

The test piece before high temperature exposure was exposed at 190°C for 500 hours to obtain a test piece after high temperature exposure.

The shear adhesion strength before or after high temperature exposure was evaluated by measuring the shear tensile strength of each test piece according to JIS K 6850. The measurement was performed under the environment of 23°C using AUTOGRAPH manufactured by Shimadzu Corp. Then, the first substrate and the second substrate were pulled in a shear direction at a speed of 50 mm/min, and the stress when the two substrates were separated was measured and defined as the shear adhesion strength.

The shear adhesion strength before high temperature exposure is preferably 0.1 MPa or more as the cured product needs to tightly adhere to the substrate before exposure to high temperatures. The shear adhesion strength after high temperature exposure is also preferably 0.1 MPa or more.

### Evaluation of void occurrence:

The first liquid and the second liquid shown in each of Examples and Comparative Examples were weighed at a ratio of 1:1, sufficiently mixed by a stirrer, and then degassed by a vacuum pump. After preparing two glass plates of about 60 cm long × 60 cm wide × 2 mm thick as substrates, the resulting thermally conductive silicone composition was applied to one glass plate substrate with an area of about 25 mm long and about 25 mm wide, and with a thickness of about 2 mm. The applied product was sandwiched between this substrate and another substrate, and cured at 23°C for 24 hours.

For evaluation of void occurrence, the above-mentioned test piece was exposed at 190°C for 500 hours, and the presence or absence of voids in the cured product was examined after high temperature exposure. If there were voids, cracks, or the like by visual inspection, it was determined that there were voids (Y), and if not, it was determined that there were no voids (N).

### Appearance evaluation method:

The first liquid and the second liquid shown in each of Examples and Comparative Examples were weighed at a ratio of 1:1, sufficiently mixed by a stirrer, and then degassed by a vacuum pump. After preparing two glass plates of about 60 cm long × 60 cm wide × 2 mm thick as substrates, the resulting thermally conductive silicone composition was applied to one glass plate substrate with an area of about 25 mm long and about 25 mm wide, and with a thickness of about 2 mm. The applied product was sandwiched between this substrate and another substrate, and cured at 23°C for 24 hours.

Appearance evaluation was performed by exposing the above-mentioned test piece at 190°C for 500 hours and examining any change in the appearance of the cured product after high temperature exposure. If there was yellowing (yellow discoloration not observed before high temperature exposure) by visual inspection, it was determined that there was yellowing (Y), and if not, it was determined that there was no yellowing (N).

### Pot life evaluation method:

The first liquid and the second liquid shown in each of Examples and Comparative Examples were weighed at a ratio of 1:1, sufficiently mixed by a stirrer, and then degassed by a vacuum pump. The viscosity at 25°C of the resulting thermally conductive silicone composition was measured according to JIS K 7117-2. Specifically, the uncured thermally conductive silicone composition described above was placed between parallel plates with a diameter of 25 mm, and the viscosity was measured at a shear rate of 10 (1/s) and a gap of 0.5 mm using Physica MR 301 manufactured by Anton Paar GmbH. The pot life was defined as the time when the viscosity became twice the initial viscosity.

### Method for evaluating amount of low molecular weight cyclic siloxane:

The first liquid and the second liquid shown in each of Examples and Comparative Examples were weighed at a ratio of 1:1, sufficiently mixed by a stirrer, and then degassed by a vacuum pump. The resulting thermally conductive silicone composition was press-molded into a plate shape of 100 mm × 100 mm × 6 mm in height and cured under a condition of 23°C for 24 hours to produce a cured product. Then, 0.3 g of this cured product was weighed, placed in 10 ml of acetone in a sample vial, and sealed to perform extraction for 12 hours. This extracted solution was subjected to gas chromatography to measure low molecular weight cyclic compounds (octamethylcyclotetrasiloxane (D4), decamethylcyclopentasiloxane (D5), dodecamethylcyclohexasiloxane (D6), tetradecamethylcycloheptasiloxane (D7), and hexadecamethylcyclooctasiloxane (D8)).

### Method for producing cured product of thermally conductive silicone composition:

### Example 1

A first liquid and a second liquid shown in each of Examples and Comparative Examples were prepared according to the following procedures and according to the chemical compositions shown in the following table. The unit of the blending ratio of each component shown in the table is "part(s) by mass".

### First liquid of each of Examples 1 to 4 and Comparative Examples 1 to 2:

A diorganopolysiloxane having an alkenyl group as the component (A) and a platinum-divinyltetramethyldisiloxane complex as the component (D) (addition reaction catalyst) were each weighed and mixed together to form a mixture. The mixture was kneaded for 30 minutes at room temperature using a planetary mixer.

The component (A) is a linear dimethylpolysiloxane having one alkenyl group only at each terminal and a viscosity of 120 mPa·s.

Thereafter, as the component (E), a half amount of a thermally conductive filler (containing a mixture of a spherical alumina having an average particle diameter of 80 µm, a spherical alumina having an average particle diameter of 5 µm, and an amorphous alumina having an average particle diameter of 0.4 µm mixed at a ratio of 7:2:1) was added thereto and kneaded for 15 minutes at room temperature using a planetary mixer.

The remaining half of the thermally conductive filler was added thereto and kneaded for 15 minutes at room temperature using a planetary mixer to prepare a first liquid.

### Second liquid of each of Examples 1 to 4 and Comparative Examples 1 to 2:

The same diorganopolysiloxane having an alkenyl group as that for the first liquid as the component (A), a linear dimethylpolysiloxane having one hydrogen atom at each terminal (two hydrogens in total) and having a viscosity of 70 mPa·s as the component (B), and a mixture of 2,4,6,8,10-pentamethylcyclopentasiloxane (HD5) and 2,4,6,8,10,12-hexamethylcyclohexasiloxane (HD6) as the component (C) were weighed and kneaded using a planetary mixer for 30 minutes at room temperature. Here, the mixture of the component (C) contained HD5 and HD6 in a total of 90 wt% in the component (C) and in a weight ratio of 6:4. The hydrogen content of the component (C) was 1.6 wt%.

After that, the same thermally conductive filler as that for the first liquid was added as the component (E), and the mixture was kneaded for 15 minutes at room temperature using a planetary mixer to prepare a second liquid.

2,4,6,8,10-Pentamethylcyclopentasiloxane (CAS6166-86-5) was obtained from Sigma-Aldrich Corp. 2,4,6,8,10,12-Hexamethylcyclohexasiloxane (CAS6166-87-6) was prepared by the method described in a literature (N. Omura and J. P. Kennedy, Macromolecules, 30, 3204 (1997)). The compounds were obtained by fractionation and its purity was determined by gas chromatography (GC).

### Comparative Examples 3 to 4:

A first liquid and a second liquid were prepared in the same manner as in Example 1, except that a linear low molecular weight polymer having an SiH group only at its terminals was added in an amount of 1.5 parts by weight and 7.7 parts by weight, respectively, instead of the component (C) .

As the linear low molecular weight polymer having one SiH group only at each terminal, a dimethylpolysiloxane having a molecular weight of 650 and a hydrogen content of 0.31 wt% was used.

### Comparative Examples 5 to 6:

A first liquid and a second liquid were prepared in the same manner as in Example 1, except that a linear dimethylpolysiloxane having a molecular weight of 6800 which contains an SiH group in a low concentration only in a side chain(s) was added in an amount of 1.5 parts by mass and 13 parts by mass, respectively, instead of the component (C).

As the linear dimethylpolysiloxane which contains an SiH group in a low concentration only in a side chain(s), a dimethylpolysiloxane with its terminals blocked by a trimethylsilyl group having a hydrogen content of 0.19 wt% was used.

### Comparative Example 7:

A first liquid and a second liquid were prepared in the same manner as in Example 1, except that a linear siloxane which contains an SiH group in a medium concentration only in a side chain(s) was added in an amount of 1.5 parts by mass instead of the component (C).

As the linear siloxane which contains an SiH group in a medium concentration only in a side chain(s), a dimethylpolysiloxane with its terminals blocked by a linear trimethylsilyl group having a hydrogen content of 1.15 wt% (Crosslinker V90 manufactured by Wacker Chemie AG) was used.

### Comparative Example 8:

A first liquid and a second liquid were prepared in the same manner as in Example 1, except that a linear siloxane which contains an SiH group in a high concentration only in a side chain(s) was added in an amount of 1.5 parts by mass instead of the component (C).

As the linear siloxane which contains an SiH group in a high concentration only in a side chain(s), a dimethylpolysiloxane with its terminals blocked by a linear trimethylsilyl group having a hydrogen content of 1.63 wt% (Crosslinker V24 manufactured by Wacker Chemie AG) was used.

### Comparative Example 9:

A first liquid and a second liquid were prepared in the same manner as in Example 1, except that 10 parts by mass of cerium oxide was added as a known heat resistance improver instead of the component (C).

Evaluation results are shown in Table 1.

In Examples 1 to 4, the hydrogenated cyclic siloxane substituted with a methyl group as the component (C) was blended in an amount of 1.0 to 3.0 parts by weight (the blending amount of the component (C) was 0.5 to 1.5 parts by mass relative to 100 parts by mass of the total amount of the components (A) and (B) contained in the entire thermally conductive silicone composition, and in Table 1, the blending amounts are described as those relative to 100 parts by mass of the total amount of the components (A) and (B) in the second liquid). The hardness change ratio after high temperature exposure relative to the initial hardness was 10% or less, and the heat resistance was favorable without void occurrence and yellowing after high temperature exposure. In addition, the shear adhesion stresses in all Examples 1 to 4 were not less than 0.1 MPa before and after high temperature exposure, which were favorable results. Pot life of 60 minutes or more was able to be secured, and the workability was good.

In Comparative Example 1, the hydrogenated cyclic siloxane of the component (C) was blended in an amount of 0.8 parts by mass (it was 0.4 parts by mass relative to 100 parts by mass of the total amount of the components (A) and (B) contained in the entire thermally conductive silicone composition), but the hardness change ratio after high temperature exposure was large, and it cannot be said that the heat resistance was sufficient.

In Comparative Example 2, the hydrogenated cyclic siloxane of the component (C) was blended in an amount of 4.0 parts by mass (it was 2.0 parts by mass relative to 100 parts by mass of the total amount of components (A) and (B) contained in the entire thermally conductive silicone composition), but the thermal conductivity was not sufficient because of the reduced relative content of the filler.

In Comparative Example 3, the low molecular weight polymer having one SiH group only at each terminal was blended in an equal parts by mass instead of the component (C) of Example 2. Since the relative hydrogen content was insufficient, the initial hardness was low and the hardness after high temperature exposure became high. Thus, the hardness change was large, occurrence of voids was also observed, and the heat resistance was insufficient.

In Comparative Example 4, the low molecular weight polymer having one SiH group only at each terminal was blended instead of the component (C) of Example 2 in such an amount that the hydrogen content was an equal amount. Since the blending amount of the low molecular weight polymer containing an SiH group only at its terminals was increased, the blending amount of the thermally conductive filler was relatively decreased, resulting in insufficient thermal conductivity. In addition to these, the hardness change was still large, and the heat resistance was insufficient.

In Comparative Example 5, the linear siloxane which contains an SiH group in a low concentration only in a side chain(s) was added in equal parts by mass instead of the component (C) of Example 2. Since the relative hydrogen content was insufficient, the initial hardness was low and the hardness after high temperature exposure was high. As a result, the hardness change after high temperature exposure was large, the occurrence of yellowing was also observed, and the heat resistance was insufficient.

In Comparative Example 6, the linear siloxane which contains an SiH group in a low concentration only in a side chain(s) was added instead of the component (C) of Example 2 in such an amount that the hydrogen content was an equal amount. As a result, the pot life was short, so that the curing of the composition proceeded during the operation of mixing the first liquid and the second liquid, so that the test piece could not be prepared. In practice, the time required for the application to a heat generating body or a heat dissipating body was limited, and thus workability was poor, which was not preferable.

In Comparative Example 7, the linear siloxane which contains an SiH group in a medium concentration only in a side chain(s) was added in equal parts by mass instead of the component (C) of Example 2. The pot life was short, and the curing of the composition proceeded during the operation of mixing the first liquid and the second liquid, so that the test piece could not be prepared. In practice, the time required for the application to a heat generating body or a heat dissipating body was limited, and thus workability was poor, which was not preferable.

In Comparative Example 8, the linear siloxane which contains an SiH group in a high concentration only in a side chain(s) was added in equal parts by mass instead of the component (C) of Example 2. The pot life was short, and the curing of the composition proceeded during the operation of mixing the first liquid and the second liquid, so that the test piece could not be prepared. In practice, the time required for the application to a heat generating body or a heat dissipating body was limited, and thus workability was poor, which was not preferable.

In Comparative Example 9, cerium oxide was added for the purpose of improving the heat resistance. However, the hardness change ratio after high temperature exposure was large and occurrence of voids was observed. Thus, the expected effect was not obtained.

**[Table 1]**

| Blending amount | | | Example 1 | Example 2 | Example 3 | Example 4 |
|---|---|---|---|---|---|---|
| First liquid | (A) Alkenyl group-containing organopolysiloxane | | 100 | 100 | 100 | 100 |
| | (D) Addition reaction catalyst | | 5 | 5 | 5 | 5 |
| | (E) Thermally conductive filler | | 1400 | 1400 | 1400 | 1400 |
| | Cerium oxide | | | | | |
| | | | | | | |
| Second liquid | (A) Alkenyl group-containing organopolysiloxane | | 30 | 30 | 30 | 30 |
| | (B) Hydrosilyl group-containing organopolysiloxane | | 70 | 70 | 70 | 70 |
| | (C) Hydrogenated cyclic siloxane | | 1,0 | 1,5 | 2,0 | 3,0 |
| | Linear low molecular weight polymer containing terminal SiH group | | | | | |
| | Linear siloxane containing low-concentration SiH group in side chain | | | | | |
| | Linear siloxane containing medium-concentration SiH group in side chain | | | | | |
| | Linear siloxane containing high-concentration SiH group in side chain | | | | | |
| | (E) Thermally conductive filler | | 1400 | 1400 | 1400 | 1400 |
| | Cerium oxide | | | | | |
| | | | | | | |
| Hydrogen content (wt%) | | | 0,016 | 0,024 | 0,032 | 0,048 |
| | | | | | | |

| Evaluation | Acceptable standard value | | | | | |
|---|---|---|---|---|---|---|
| Workability evaluation | Viscosity (Pas) (shear rate 1/s) | < 1000 Pas | 550 | 579 | 533 | 810 |
| | Viscosity (Pas) (shear rate 10/s) | < 200 Pas | 175 | 177 | 170 | 185 |
| Thermal conductivity evaluation | Thermal conductivity (W/m·k) | 5.0 or more | 5,2 | 5,2 | 5,1 | 5,0 |
| Hardness change ratio evaluation | Shore OO hardness (initial) | | 87 | 91 | 94 | 97 |
| | Shore OO hardness (after high temperature exposure) | | 94,0 | 94 | 95 | 98 |
| | Hardness change ratio | 10% or less | 8,0 | 4 | 1 | 1 |
| Shear adhesion stress (before high temperature exposure) (MPa | | 0.1 or more | 0,15 | 0,20 | 0,27 | 0,45 |
| Shear adhesion stress (after high temperature exposure) (MPa) | | 0.1 or more | 0,30 | 0,60 | 0,40 | 0,60 |
| Void occurrence evaluation (Y: voids, N: no voids) | | N | N | N | N | N |
| Appearance evaluation (Y: yellowing, N: no yellowing) | | N | N | N | N | N |
| Pot life (min) | | >60 min | > 60 | > 60 | > 60 | > 60 |

| Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|
| 100 | 100 | 100 | 100 | 100 | 100 | 100 | 100 | 100 |
| 5 | 5 | 5 | 5 | 5 | 5 | 5 | 5 | 5 |
| 1400 | 1400 | 1400 | 1400 | 1400 | 1400 | 1400 | 1400 | 1400 |
| | | | | | | | | 10 |
| | | | | | | | | |
| 30 | 30 | 30 | 30 | 30 | 30 | 30 | 30 | 30 |
| 70 | 70 | 70 | 70 | 70 | 70 | 70 | 70 | 70 |
| 0,8 | 4,0 | | | | | | | |
| | | 1,5 | 7,7 | | | | | |
| | | | | 1,5 | 13 | | | |
| | | | | | | 1,5 | | |
| | | | | | | | 1,5 | |
| 1400 | 1400 | 1400 | 1400 | 1400 | 1400 | 1400 | 1400 | 1400 |
| | | | | | | | | 10 |
| | | | | | | | | |
| 0,012 | 0,064 | 0,005 | 0,024 | 0,003 | 0,024 | 0,017 | 0,025 | 0,000 |
| | | | | | | | | |
| | | | | | | | | |
| 527 | 1000 | 575 | 520 | 593 | 544 | 2819 | 3724 | 610 |
| 174 | 250 | 180 | 170 | 183 | 181 | 175 | 407 | 183 |
| 5,2 | 4,8 | 5,3 | 4,8 | 5,2 | Unmeasurable | Unmeasurable | Unmeasurable | 5,2 |
| 68 | 98 | 57 | 83 | 78 | Unmeasurable | Unmeasurable | Unmeasurable | 54 |
| 93,0 | 98 | 90 | 93 | 91 | - | - | - | 90 |
| 38,0 | 0 | 57 | 12 | 17 | Unmeasurable | Unmeasurable | Unmeasurable | 66 |
| 0,10 | 0,70 | 0,04 | 0,15 | 0,08 | Unmeasurable | Unmeasurable | Unmeasurable | 0,01 |
| 0,30 | 0,80 | 0,01 | 0,08 | 0,02 | - | - | - | 0,05 |
| N | N | Y | N | N | - | - | - | Y |
| N | N | Y | Y | Y | - | - | - | N |
| > 60 | > 60 | > 60 | > 60 | > 60 | < 10 | < 10 | < 10 | > 60 |

## Claims

1. A thermally conductive silicone composition comprising:
a component (A) that is an alkenyl group-containing organopolysiloxane;
a component (B) that is a linear organopolysiloxane having two or more hydrosilyl groups within one molecule;
a component (C) that is a hydrogenated cyclic siloxane represented by the following general formula (1) 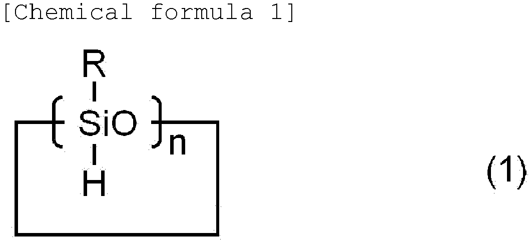 (in the formula, n is an integer of 4 or more and 8 or less, and R is a monovalent hydrocarbon group having 1 to 6 carbon atoms) ;
a component (D) that is an addition reaction catalyst; and
a component (E) that is a thermally conductive filler, wherein
relative to 100 parts by mass of a total amount of the component (A) and the component (B),
a content of the component (C) is 0.5 parts by mass or more and 1.8 parts by mass or less and
a content of the component (E) is 500 parts by mass or more and 3,000 parts by mass or less.

2. The thermally conductive silicone composition according to claim 1, wherein the component (C) includes 1,3,5,7,9-pentamethylcyclopentasiloxane (HD5) and 1,3,5,7,9,11-hexamethylcyclohexasiloxane (HD6).

3. The thermally conductive silicone composition according to claim 2, wherein:
a mass ratio of the component (A) to the component (B) (mass of the component (A) : mass of the component (B)) falls within a range of 80:20 to 50:50; and
a total amount of the HD5 and the HD6 is 0.5 parts by mass or more and 1.5 parts by mass or less relative to 100 parts by mass of the total amount of the component (A) and the component (B).

4. The thermally conductive silicone composition according to claim 1 or 2, wherein a total content of octamethylcyclotetrasiloxane (D4), decamethylcyclopentasiloxane (D5) and dodecamethylcyclohexasiloxane (D6), tetradecamethylcycloheptasiloxane (D7), and hexadecamethylcyclooctasiloxane (D8) is less than 0.1 parts by mass relative to 100 parts by mass of the total amount of the components (A) and (B).

5. The thermally conductive silicone composition according to claim 1 or 2, wherein
a cured product obtained by curing the thermally conductive silicone composition has:
a hardness change ratio of 10% or less according to a hardness change ratio evaluation method described below; and
a thermal conductivity of 5.0 W/m·k or more according to a thermal conductivity measurement method described below:
Hardness change ratio evaluation method
the cured product obtained by curing at 23°C for 24 hours is measured for Shore OO hardness according to the ASTM D 2240 standard using a Shore OO hardness durometer and a value obtained is defined as an initial Shore OO hardness,
the cured product obtained by curing at 23°C for 24 hours is exposed to 190°C for 500 hours and then cooled to 23°C, and a resulting cured product is measured for the Shore OO hardness according to the ASTM D 2240 standard using the Shore OO hardness durometer and a value obtained is defined as a Shore OO hardness after high temperature exposure, and
a change ratio of the Shore OO hardness after high temperature exposure relative to the initial Shore OO hardness is calculated; and
Thermal conductivity measurement method
the thermally conductive silicone composition is press-molded into a columnar shape with a diameter of 30 mm and a height of 6 mm, and then is cured under a condition of 23°C for 24 hours to produce a columnar cured product, and a thermal conductivity of the cured product is measured by a hot disk method according to ISO 22007-2.

6. A thermally conductive silicone composition including an alkenyl group-containing organopolysiloxane as a component (A), a linear organopolysiloxane having two or more hydrosilyl groups within one molecule as a component (B), an addition reaction catalyst as a component (D), and a thermally conductive filler as a component (E), the composition further comprising a hydrogenated cyclic siloxane as a component (C), resulting in reducing occurrence of voids in an adhesion part between a cured product and a substrate after the cured product is exposed to a high temperature of 190°C or higher, in which the cured product is obtained by applying the thermally conductive silicone composition to the substrate and curing the applied composition.

7. A method for producing a two-component thermally conductive silicone composition comprising:
a first step of mixing an alkenyl group-containing organopolysiloxane as a component (A), an addition reaction catalyst as a component (D), and a thermally conductive filler to obtain a first liquid as a component (E); and
a second step of mixing the component (A) of an alkenyl group-containing organopolysiloxane, a linear organopolysiloxane having two or more hydrosilyl groups within one molecule as a component (B), a hydrogenated cyclic siloxane as a component (C), and a thermally conductive filler as a component (E) to obtain a second liquid.

8. A method for reducing generation of voids in an adhesion part between a cured product and a substrate after the cured product is exposed to a high temperature of 190°C or higher, wherein the cured product is obtained by applying a thermally conductive silicone composition to the substrate and curing the applied composition, and the thermally conductive silicone composition is obtained by blending, in a thermally conductive silicone composition including an alkenyl group-containing organopolysiloxane as a component (A), a linear organopolysiloxane having two or more hydrosilyl groups within one molecule as a component (B), an addition reaction catalyst as a component (D), and a thermally conductive filler as a component (E), a hydrogenated cyclic siloxane including at least one selected from 1,3,5,7,9-pentamethylcyclopentasiloxane (HD5) and 1,3,5,7,9,11-hexamethylcyclohexasiloxane (HD6) as a component (C).

## Patentansprüche

1. Wärmeleitfähige Silikonzusammensetzung, die Folgendes umfasst:
eine Komponente (A), die ein alkenylgruppenhaltiges Organopolysiloxan ist;
eine Komponente (B), die ein lineares Organopolysiloxan mit zwei oder mehr Hydrosilylgruppen in einem Molekül ist;
eine Komponente (C), die ein hydriertes cyclisches Siloxan ist, das durch die folgende allgemeine Formel (1)
repräsentiert wird 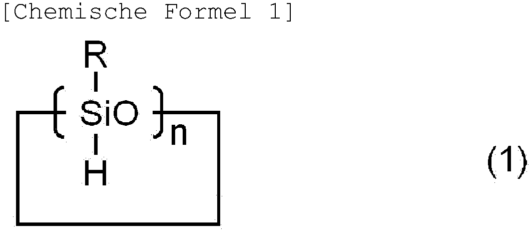 (in der Formel ist n eine ganze Zahl von 4 oder mehr und 8 oder weniger und ist R eine einwertige Kohlenwasserstoffgruppe mit 1 bis 6 Kohlenstoffatomen); eine Komponente (D), die ein Additionsreaktionskatalysator ist; und
eine Komponente (E), die ein wärmeleitfähiger Füllstoff ist, wobei
bezogen auf 100 Masseteile einer Gesamtmenge der Komponente (A) und der Komponente (B)
ein Gehalt der Komponente (C) 0,5 Masseteile oder mehr und 1,8 Masseteile oder weniger beträgt und
ein Gehalt der Komponente (E) 500 Masseteile oder mehr und 3.000 Masseteile oder weniger beträgt.

2. Wärmeleitfähige Silikonzusammensetzung nach Anspruch 1, wobei die Komponente (C) 1,3,5,7,9-Pentamethylcyclopentasiloxan (HD5) und 1,3,5,7,9,11-Hexamethylcyclohexasiloxan (HD6) beinhaltet.

3. Wärmeleitfähige Silikonzusammensetzung nach Anspruch 2, wobei:
min Massenverhältnis der Komponente (A) zu der Komponente (B) (Masse der Komponente (A) : Masse der Komponente (B)) in einem Bereich von 80:20 bis 50:50 fällt; und
eine Gesamtmenge des HD5 und des HD6 0,5 Masseteile oder mehr und 1,5 Masseteile oder weniger bezogen auf 100 Masseteile der Gesamtmenge der Komponente (A) und der Komponente (B) beträgt.

4. Wärmeleitfähige Silikonzusammensetzung nach Anspruch 1 oder 2, wobei ein Gesamtgehalt an Octamethylcyclotetrasiloxan (D4), Decamethylcyclopentasiloxan (D5) und Dodecamethylcyclohexasiloxan (D6), Tetradecamethylcycloheptasiloxan (D7) und Hexadecamethylcyclooctasiloxan (D8) weniger als 0,1 Masseteile bezogen auf 100 Masseteile der Gesamtmenge der Komponenten (A) und (B) beträgt.

5. Wärmeleitfähige Silikonzusammensetzung nach Anspruch 1 oder 2, wobei
ein ausgehärtetes Produkt, das durch Aushärten der wärmeleitfähigen Silikonzusammensetzung erhalten wird, Folgendes aufweist:
ein Härteänderungsverhältnis von 10 % oder weniger gemäß einem nachfolgend beschriebenen Härteänderungsverhältnisauswertungsverfahren; und
eine Wärmeleitfähigkeit von 5,0 W/m·k oder mehr gemäß einem nachfolgend beschriebenen Wärmeleitfähigkeitsmessungsverfahren:
Härteänderungsverhältnisauswertungsverfahren das ausgehärtete Produkt, das durch Aushärten bei 23 °C für 24 Stunden erhalten wird, wird gemäß der Norm ASTM D 2240 unter Verwendung eines Shore-OO-Härte-Durometers hinsichtlich einer Shore-OO-Härte gemessen und ein erhaltener Wert wird als eine anfängliche Shore-OO-Härte definiert,
das ausgehärtete Produkt, das durch Aushärten bei 23 °C für 24 Stunden erhalten wird, wird für 500 Stunden 190 °C ausgesetzt und dann auf 23 °C abgekühlt und ein resultierendes ausgehärtetes Produkt wird gemäß der Norm ASTM D 2240 unter Verwendung des Shore-OO-Härte-Durometers hinsichtlich der Shore-OO-Härte gemessen und ein erhaltener Wert wird als eine Shore-OO-Härte nach einer Hochtemperaturexposition definiert, und
ein Änderungsverhältnis der Shore-OO-Härte nach einer Hochtemperaturexposition relativ zu der anfänglichen Shore-OO-Härte wird berechnet; und Wärmeleitfähigkeitsmessungsverfahren
die wärmeleitfähige Silikonzusammensetzung wird zu einer säulenförmigen Form mit einem Durchmesser von 30 mm und einer Höhe von 6 mm pressgeformt und wird dann unter einer Bedingung von 23°C für 24 Stunden ausgehärtet, um ein säulenförmiges ausgehärtetes Produkt zu erzeugen, und eine Wärmeleitfähigkeit des ausgehärteten Produkts wird durch ein Heißscheibenverfahren nach ISO 22007-2 gemessen.

6. Wärmeleitfähige Silikonzusammensetzung, die ein alkenylgruppenhaltiges Organopolysiloxan als eine Komponente (A), ein lineares Organopolysiloxan mit zwei oder mehr Hydrosilylgruppen innerhalb eines Moleküls als eine Komponente (B), einen Additionsreaktionskatalysator als eine Komponente (D) und einen wärmeleitfähigen Füllstoff als eine Komponente (E) beinhaltet, wobei die Zusammensetzung ferner ein hydriertes cyclisches Siloxan als eine Komponente (C) umfasst, was dazu führt, dass das Auftreten von Hohlräumen in einem Haftteil zwischen einem ausgehärteten Produkt und einem Substrat reduziert wird, nachdem das ausgehärtete Produkt einer hohen Temperatur von 190 °C oder höher ausgesetzt wurde, wobei das ausgehärtete Produkt durch Aufbringen der wärmeleitfähigen Silikonzusammensetzung auf das Substrat und Aushärten der aufgebrachten Zusammensetzung erhalten wird.

7. Verfahren zum Produzieren einer wärmeleitfähigen zweikomponentigen Silikonzusammensetzung, das Folgendes umfasst:
einen ersten Schritt des Mischens eines alkenylgruppenhaltigen Organopolysiloxans als eine Komponente (A), eines Additionsreaktionskatalysators als eine Komponente (D) und eines wärmeleitfähigen Füllstoffs, um eine erste Flüssigkeit als eine Komponente (E) zu erhalten; und
einen zweiten Schritt des Mischens der Komponente (A) eines alkenylgruppenhaltigen Organopolysiloxans, eines linearen Organopolysiloxans mit zwei oder mehr Hydrosilylgruppen innerhalb eines Moleküls als eine Komponente (B), eines hydrierten cyclischen Siloxans als eine Komponente (C) und eines wärmeleitfähigen Füllstoffs als eine Komponente (E), um eine zweite Flüssigkeit zu erhalten.

8. Verfahren zum Reduzieren einer Erzeugung von Hohlräumen in einem Haftteil zwischen einem ausgehärteten Produkt und einem Substrat, nachdem das ausgehärtete Produkt einer hohen Temperatur von 190 °C oder höher ausgesetzt wurde, wobei das ausgehärtete Produkt durch Aufbringen einer wärmeleitfähigen Silikonzusammensetzung auf das Substrat und Aushärten der aufgebrachten Zusammensetzung erhalten wird, und die wärmeleitfähige Silikonzusammensetzung erhalten wird, indem in eine wärmeleitfähige Silikonzusammensetzung, die ein alkenylgruppenhaltiges Organopolysiloxan als eine Komponente (A), ein lineares Organopolysiloxan mit zwei oder mehr Hydrosilylgruppen innerhalb eines Moleküls als eine Komponente (B), einen Additionsreaktionskatalysator als eine Komponente (D) und einen wärmeleitfähigen Füllstoff als eine Komponente (E) beinhaltet, ein hydriertes cyclisches Siloxan, das wenigstes eines ausgewählt aus 1,3,5,7,9-Pentamethylcyclopentasiloxan (HD5) und 1,3,5,7,9,11-Hexamethylcyclohexasiloxan (HD6) beinhaltet, als eine Komponente (C) gemischt wird.

## Revendications

1. Composition de silicone thermoconductrice comprenant :
un composant (A) qui est un organopolysiloxane contenant un groupe alcényle ;
un composant (B) qui est un organopolysiloxane linéaire portant au moins deux groupes hydrosilyle à l'intérieur d'une molécule ;
un composant (C) qui est un siloxane cyclique hydrogéné
représenté par la formule générale (1) suivante 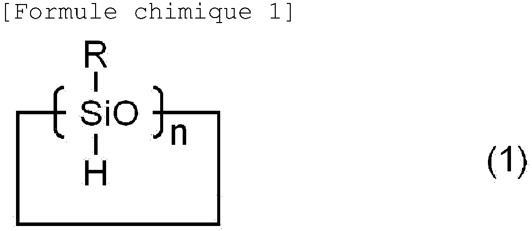 (dans la formule, n est un entier valant 4 ou plus et 8 ou moins, et R est un groupe hydrocarboné monovalent portant 1 à 6 atomes de carbone) ;
un composant (D) qui est un catalyseur de réaction d'addition ; et
un composant (E) qui est une charge thermoconductrice, dans laquelle,
pour 100 parties en masse d'une quantité totale du composant (A) et du composant (B),
une teneur du composant (C) est de 0,5 partie en masse ou plus et 1,8 partie en masse ou moins et
une teneur du composant (E) est de 500 parties en masse ou plus et 3000 parties en masse ou moins.

2. Composition de silicone thermoconductrice selon la revendication 1, dans laquelle le composant (C) comporte du 1,3,5,7,9-pentaméthylcyclopentasiloxane (HD5) et du 1,3,5,7,9,11-hexaméthylcyclohexasiloxane (HD6).

3. Composition de silicone thermoconductrice selon la revendication 2, dans laquelle :
un rapport massique entre le composant (A) et le composant (B) (masse du composant (A)/masse du composant (B)) se situe dans une plage de 80/20 à 50/50 ; et
une quantité totale du HD5 et du HD6 est de 0,5 partie en masse ou plus et 1,5 partie en masse ou moins pour 100 parties en masse de la quantité totale du composant (A) et du composant (B).

4. Composition de silicone thermoconductrice selon la revendication 1 ou 2, dans laquelle une teneur totale en octaméthylcyclotétrasiloxane (D4), décaméthylcyclopentasiloxane (D5) et dodécaméthylcyclohexasiloxane (D6), tétradécaméthylcycloheptasiloxane (D7), et hexadécaméthylcyclooctasiloxane (D8) est inférieure à 0,1 partie en masse pour 100 parties en masse de la quantité totale des composants (A) et (B).

5. Composition de silicone thermoconductrice selon la revendication 1 ou 2, dans laquelle :
un produit durci obtenu par durcissement de la composition de silicone thermoconductrice présente :
un taux de variation de dureté de 10 % ou moins conformément à une méthode d'évaluation de taux de variation de dureté décrite ci-dessous ; et
une conductivité thermique de 5,0 W/m·K ou plus conformément à une méthode de mesure de conductivité thermique décrite ci-dessous :
Méthode d'évaluation de taux de variation de dureté la dureté Shore OO du produit durci obtenu par durcissement à 23 °C pendant 24 heures est mesurée conformément à la norme ASTM D 2240 au moyen d'un duromètre de dureté Shore OO et une valeur obtenue est définie comme une dureté Shore OO initiale,
le produit durci obtenu par durcissement à 23 °C pendant 24 heures est exposé à 190 °C pendant 500 heures puis refroidi jusqu'à 23 °C, et la dureté Shore OO d'un produit durci résultant est mesurée conformément à la norme ASTM D 2240 au moyen du duromètre de dureté Shore OO et une valeur obtenue est définie comme une dureté Shore OO après exposition à haute température, et
un taux de variation de la dureté Shore OO après exposition à haute température par rapport à la dureté Shore OO initiale est calculé ; et
Méthode de mesure de conductivité thermique la composition de silicone thermoconductrice est moulée à la presse en une forme colonnaire d'un diamètre de 30 mm et d'une hauteur de 6 mm, et est ensuite durcie à 23 °C pendant 24 heures pour produire un produit colonnaire durci, et une conductivité thermique du produit durci est mesurée par une méthode de disque chaud conformément à la norme ISO 22007-2.

6. Composition de silicone thermoconductrice comportant un organopolysiloxane contenant un groupe alcényle comme composant (A), un organopolysiloxane linéaire portant au moins deux groupes hydrosilyle à l'intérieur d'une molécule comme composant (B), un catalyseur de réaction d'addition comme composant (D), et une charge thermoconductrice comme composant (E), la composition comprenant en outre un siloxane cyclique hydrogéné comme composant (C), ce qui se solde par une réduction de l'apparition de vides dans une partie d'adhésion entre un produit durci et un substrat après que le produit durci a été exposé à une température élevée de 190 °C ou plus, le produit durci étant obtenu par application de la composition de silicone thermoconductrice au substrat et durcissement de la composition appliquée.

7. Procédé de production d'une composition de silicone thermoconductrice bicomposant comprenant :
une première étape de mélange d'un organopolysiloxane contenant un groupe alcényle comme composant (A), d'un catalyseur de réaction d'addition comme composant (D) et d'une charge thermoconductrice pour obtenir un premier liquide comme composant (E) ; et
une deuxième étape de mélange du composant (A) d'un organopolysiloxane contenant un groupe alcényle, d'un organopolysiloxane linéaire portant au moins deux groupes hydrosilyle à l'intérieur d'une molécule comme composant (B), d'un siloxane cyclique hydrogéné comme composant (C) et d'une charge thermoconductrice comme composant (E) pour obtenir un deuxième liquide.

8. Procédé destiné à réduire la création de vides dans une partie d'adhésion entre un produit durci et un substrat après que le produit durci a été exposé à une température élevée de 190 °C ou plus, dans lequel le produit durci est obtenu par application d'une composition de silicone thermoconductrice au substrat et durcissement de la composition appliquée, et la composition de silicone thermoconductrice est obtenue par mélange, dans une composition de silicone thermoconductrice comportant un organopolysiloxane contenant un groupe alcényle comme composant (A), un organopolysiloxane linéaire portant au moins deux groupes hydrosilyle à l'intérieur d'une molécule comme composant (B), un catalyseur de réaction d'addition comme composant (D) et une charge thermoconductrice comme composant (E), d'un siloxane cyclique hydrogéné comportant au moins un composé choisi parmi le 1,3,5,7,9-pentaméthylcyclopentasiloxane (HD5) et le 1,3,5,7,9,11-hexaméthylcyclohexasiloxane (HD6) comme composant (C).
